(19) Europäisches Patentamt
European Patent Office
Office européen des brevets

(11) **EP 4 517 745 A1**

(12) **EUROPEAN PATENT APPLICATION**
published in accordance with Art. 153(4) EPC

(43) Date of publication:
**05.03.2025 Bulletin 2025/10**

(21) Application number: **23823041.1**

(22) Date of filing: **09.06.2023**

(51) International Patent Classification (IPC):
**G10L 15/30** (2013.01)     **G10L 15/22** (2006.01)
**G10L 15/00** (2013.01)

(52) Cooperative Patent Classification (CPC):
**G10L 15/00; G10L 15/22; G10L 15/30**

(86) International application number:
**PCT/CN2023/099358**

(87) International publication number:
**WO 2023/241473 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.06.2022   CN 202210667633**

(71) Applicant: **Huawei Technologies Co., Ltd.
Shenzhen, Guangdong 518129 (CN)**

(72) Inventors:
• **SONG, Kaikai**
  **Shenzhen, Guangdong 518129 (CN)**
• **ZHOU, Jianhui**
  **Shenzhen, Guangdong 518129 (CN)**
• **WU, Qiqiang**
  **Shenzhen, Guangdong 518129 (CN)**
• **SONG, Chaoling**
  **Shenzhen, Guangdong 518129 (CN)**

(74) Representative: **Epping - Hermann - Fischer
Patentanwaltsgesellschaft mbH
Schloßschmidstraße 5
80639 München (DE)**

(54) **METHOD FOR PROCESSING SPEECH DATA, AND TERMINAL DEVICE**

(57)     This application provides a voice data processing method and a terminal device, and relates to the field of terminal technologies. The method includes: obtaining first voice data; when determining that the first voice data is a first round of dialog in a first session and the first session is a session triggered in a wakeup-free manner, recognizing the first voice data to obtain a first recognition result and a first confidence level, where the first confidence level indicates a reliability degree of the first recognition result; and generating a first machine instruction based on the first recognition result if the first confidence level is greater than or equal to a first threshold. According to technical solutions provided in this application, a load of a server can be reduced.

FIG. 11

EP 4 517 745 A1

## Description

This application claims priority to Chinese Patent Application No. 202210667633.2, filed with the China National Intellectual Property Administration on June 13, 2022 and entitled "VOICE DATA PROCESSING METHOD AND TERMINAL DEVICE", which is incorporated herein by reference in its entirety.

## TECHNICAL FIELD

This application relates to the field of terminal technologies, and in particular, to a voice data processing method and a terminal device.

## BACKGROUND

Currently, electronic devices such as on-board devices and smart speakers have gradually become indispensable parts in people's life. To improve human-computer interaction efficiency and user experience, voice-based human-computer interaction gradually attracts wide attention. Therefore, a voice data processing method is urgently needed.

In the conventional technology, an electronic device may obtain voice data of a user and transmit the voice data to a server in real time. The server processes the voice data to obtain a machine instruction corresponding to the voice data. The server sends the machine instruction to the electronic device, and then the electronic device executes the machine instruction.

However, because there may be a very large quantity of electronic devices, and the large quantity of electronic devices continuously send voice data to a server, the server receives a large amount of voice data. This causes an excessive load of the server, and further causes other problems, for example, the voice data cannot be processed in time.

## SUMMARY

In view of this, this application provides a voice data processing method and a terminal device, which can reduce a load of a server.

To achieve the foregoing objective, according to a first aspect, an embodiment of this application provides a voice data processing method, applied to a terminal device, where the method includes:

obtaining first voice data; when determining that the first voice data is a first round of dialog in a first session and the first session is a session triggered in a wakeup-free manner, recognizing the first voice data to obtain a first recognition result and a first confidence level, where the first confidence level indicates a reliability degree of the first recognition result; and generating a first machine instruction based on the first recognition result if the first confidence level is greater than or equal to a first threshold.

The first machine instruction may indicate an operation indicated by a user through the first voice data.

In this embodiment of this application, when obtaining the first voice data and determining that the first voice data is the first round of dialog in the first session triggered in the wakeup-free manner, the terminal device may recognize the first voice data to obtain the first recognition result and the first confidence level. The first confidence level may indicate a confidence level of the first recognition result. Therefore, for the first round of session in the session triggered in the wakeup-free manner, the terminal device may generate the first machine instruction at a local end based on the first recognition result when the first confidence level is greater than or equal to the first threshold, that is, when the first recognition result has a high reliability degree, thereby saving bandwidth between the terminal device and the server, reducing load pressure on the server, and improving efficiency of processing the first voice data.

In some embodiments, the determining that the first voice data is a first round of dialog in a first session and the first session is a session triggered in a wakeup-free manner includes:

determining, if first status indication information corresponding to the first voice data is detected, that the first voice data is the first round of dialog in the first session and the first session is the session triggered in the wakeup-free manner.

The first status indication information may indicate that the first voice data is the first round of dialog in the first session and the first session is the session triggered in the wakeup-free manner. The first status indication information can accurately and clearly indicate that the first voice data is the first round of dialog in the first session and the first session is the session triggered in the wakeup-free manner.

In some embodiments, the method further includes: obtaining a second machine instruction from a server based on the first voice data if the first confidence level is less than the first threshold. In some embodiments, if there is no unterminated second session before the first voice data, no event corresponding to event wakeup triggering is detected, no button operation corresponding to button wakeup triggering is detected, and no preset wakeup word is detected in the first voice data, the first status indication information corresponding to the first voice data may be generated. The first status indication information may indicate that the first voice data is the first round of dialog in the first session and the first session is the session triggered in the wakeup-free manner. In some embodiments, the first status indication information may be added to the first voice data, or the first voice data and the first status indication information may be encapsulated in a same data packet, or the first voice data and the first status indication information may be correspondingly stored.

In some embodiments, the first status indication information may include a first session identifier, a first round identifier, and a first triggering type. A session corresponding to the first session identifier is the first session. The first round identifier indicates that the first voice data is the first round of dialog. The first triggering type identifier indicates that the first session is triggered in a wakeup-free manner.

When the first recognition result has a low reliability degree, the terminal device may request the server to recognize the first voice data again, to obtain the second machine instruction with higher accuracy, thereby improving accuracy of processing the voice data.

In some embodiments, if the first voice data and second status indication information corresponding to the first voice data are detected, the second machine instruction is obtained from the server based on the first voice data.

If the second status indication information corresponding to the first voice data is detected, the first voice data may be an $N^{th}$ round of dialog in a session triggered in a wakeup-free manner, or may be any round of dialog triggered in a non-wakeup-free manner. A common point is that the terminal device responds to the user at least once in this case, that is, the terminal device can determine that a dialog with the user has started. Therefore, the server may be directly requested to process the first voice data, to improve accuracy of processing the first voice data.

In some embodiments, if there is an unterminated second session before the first voice data, and/or any one of a preset wakeup word included in the first voice data, an event corresponding to event wakeup triggering, and a button operation corresponding to button wakeup triggering is detected, the second status indication information corresponding to the first voice data is generated. The second status indication information may indicate that the first voice data is an $N^{th}$ round of dialog in the second session, and/or a triggering manner of the second session is voice wakeup triggering, event wakeup triggering, or button wakeup triggering, where N is an integer greater than 1. In some embodiments, the second status indication information may be added to the first voice data, or the first voice data and the second status indication information may be encapsulated in a same data packet, or the first voice data and the second status indication information may be correspondingly stored.

In some embodiments, the second status indication information may include a second session identifier and a second round identifier. The second session identifier corresponds to the second session. The second round identifier indicates that the first voice data is an $N^{th}$ round of dialog. In some embodiments, the second status indication information may include a second triggering type identifier. The second triggering type identifier may indicate that the triggering manner of the second session is voice wakeup triggering, event wakeup triggering, or button wakeup triggering. In some embodiments, the method further includes: sending the first voice data to the server; and the obtaining a second machine instruction from a server based on the first voice data includes: receiving the second machine instruction sent by the server based on the first voice data.

The terminal device may send the obtained first voice data to the server, so that the server starts processing from recognition of the first voice data, thereby improving accuracy of processing the first voice data.

In some embodiments, the sending the first voice data to the server includes: sending the first voice data to the server when the first voice data is detected; and before the receiving the second machine instruction sent by the server based on the first voice data, the method further includes: sending a first request to the server, where the first request is for requesting the server to recognize the first voice data.

The terminal device first sends the first voice data to the server. In this case, when it is determined that the server is requested to recognize the first voice data, the first voice data does not need to be sent again, thereby improving efficiency of processing the first voice data.

In some embodiments, the sending the first voice data to the server includes:
sending a first request and the first voice data to the server if the first confidence level is less than the first threshold, where the first request is for requesting the server to recognize the first voice data.

In some embodiments, the first request may carry the first voice data.

When it is determined that the server is requested to process the first voice data, the terminal device sends the first voice data to the server, thereby reducing a data volume and frequency of sending data to the server, further saving bandwidth between the terminal device and the server, and reducing load pressure on the server.

In some embodiments, the method further includes: sending first text data corresponding to the first voice data to the server; and the obtaining a second machine instruction from a server based on the first voice data includes: receiving the second machine instruction sent by the server based on the first text data.

The terminal device sends, instead of the first voice data, the first text data corresponding to the first voice data to the server, thereby reducing a volume of data sent to the server, saving bandwidth between the terminal device and the server, reducing load pressure on the server, and improving efficiency of processing the first voice data.

In some embodiments, the sending first text data corresponding to the first voice data to the server includes:

sending a second request and the first text data to the server if the first confidence level is less than the first threshold, where the second request is for requesting the server to recognize the first text data.

In some embodiments, the second request may carry the first text data.

In some embodiments, the terminal device may send the first text data to the server as soon as the first text data is obtained.

In some embodiments, the obtaining a second machine instruction from a server based on the first voice data includes: obtaining second voice data based on the first voice data, where the second voice data is an $N^{th}$ round of dialog in the first session, and N is an integer greater than 1; and receiving the second machine instruction sent by the server based on the second voice data.

In some embodiments, second status indication information corresponding to the second voice data may be detected. The second status indication information indicates that the second voice data is the $N^{th}$ round of dialog in the first session, and N is an integer greater than 1.

In some embodiments, the recognizing the first voice data to obtain a first recognition result and a first confidence level includes: recognizing the first voice data based on a stored first entity set and a stored first model, to obtain the first recognition result and the first confidence level.

The first recognition result may include at least one of the first text data and first intent data that correspond to the first voice data. The first entity set may include at least one of a second entity set and a third entity set. The first model may include at least one of a second model and a third model. In some embodiments, the second entity set and the third entity set may include at least one same entity.

In some embodiments, the terminal device may determine the first text data corresponding to the first voice data through the second entity set and the second model, and determine the first intent data based on the first text data through the third entity set and the third model.

In some embodiments, the method further includes: obtaining a first entity from the server based on the first voice data if the first confidence level is less than the first threshold, where the first entity is obtained by recognizing the first voice data by the server; and adding the first entity to the first entity set.

In some embodiments, the method further includes: obtaining a second recognition result from the server based on the first voice data if the first confidence level is less than the first threshold, where the second recognition result is obtained by recognizing the first voice data by the server; and updating the first model based on the second recognition result.

In some embodiments, the first recognition result includes the first text data corresponding to the first voice data, the second recognition result includes second text data corresponding to the first voice data, and the obtaining a second recognition result from the server based on the first voice data includes: sending the first voice data to the server; and obtaining the second text data sent by the server based on the first voice data.

In some embodiments, the first recognition result includes first intent data corresponding to the first voice data, the second recognition result includes at least one of second intent data and second text data, both the second intent data and the second text data correspond to the first voice data, and the obtaining a second recognition result from the server based on the first voice data includes:

sending the first voice data to the server, and obtaining at least one of the second intent data and the second text data that are sent by the server based on the first voice data; or
sending the first text data corresponding to the first voice data to the server, and obtaining the second intent data sent by the server based on the first text data.

In some embodiments, the server may determine the second text data corresponding to the first voice data through a fifth entity set and a fifth model, and determine the second intent data based on the second text data through a fourth entity set and a fourth model.

The first entity may be an entity obtained by recognizing the first text data by the server, or the first entity may be an entity included in the second intent data and the fourth entity set; and/or the first entity may be an entity obtained by recognizing the first voice data by the server, or the first entity may be an entity included in the second text data and the fifth entity set.

The terminal device stores the first entity from the server to the second entity set and/or the third entity set at the local end of the terminal, to extend the second entity set and/or the third entity set at the local end, so that when again obtaining voice data that may include the first entity, the terminal device can accurately recognize the voice data, and does not need to request the server again to recognize the voice data.

The terminal device updates the second model and/or the third model at the local end of the terminal device based on the second text data and/or the second intent data that are/is obtained by recognizing the first voice data by the server, so that the second model and/or the third model have/has a more accurate recognition capability, and when voice data similar to the first voice data is obtained again, the voice data can be accurately recognized, and the server does not need to be requested again to recognize the voice data.

**In** some embodiments, the first recognition result includes the first intent data corresponding to the first voice data, and before the generating a first machine instruction based on the first recognition result if the first confidence level is greater than or equal to a first threshold, the method further includes: determining that the first intent data includes a first intent.

**In** other words, the terminal device may continue to perform a subsequent step when determining that the first intent data includes the first intent, and may not continue to perform a subsequent step when determining that the first intent data does not include the first intent. This reduces load pressure on the terminal device and the server, and also reduces a false response to the dialog of the user, thereby further improving accuracy of processing the voice data and improving user experience.

According to a second aspect, an embodiment of this application provides a voice data processing method, applied to a terminal device, where the method includes:

obtaining first voice data; when determining that the first voice data is a first round of dialog in a first session or when determining that the first voice data is an $N^{th}$ round of dialog in the first session and the first session is a session triggered in a wakeup-free manner, recognizing the first voice data to obtain a first recognition result and a first confidence level, where the first confidence level indicates a reliability degree of the first recognition result; and generating a first machine instruction based on the first recognition result if the first confidence level is greater than or equal to a first threshold.

In this embodiment of this application, when obtaining the first voice data and determining that the first voice data is the first round of dialog in the first session or the first session is the session triggered in the wakeup-free manner, the terminal device may recognize the first voice data to obtain the first recognition result and the first confidence level. The first confidence level may indicate a confidence level of the first recognition result. Therefore, for any round of session in the session triggered in the wakeup-free manner or for the first round of session in a session triggered in a non-wakeup-free manner, the terminal device may generate the first machine instruction at a local end based on the first recognition result when the first confidence level is greater than or equal to the first threshold, that is, when the first recognition result has a high reliability degree, thereby saving bandwidth between the terminal device and the server, reducing load pressure on the server, and improving efficiency of processing the first voice data.

In some embodiments, if first status indication information corresponding to the first voice data is detected, it may be determined that the first voice data is the first round of dialog in the first session, or it may be determined that the first voice data is the $N^{th}$ round of dialog in the first session and the first session is the session triggered in the wakeup-free manner. The first status indication information indicates that the first voice data is the first round of dialog in the first session or the first session is the session triggered in the wakeup-free manner.

In some embodiments, the method further includes:

obtaining a second machine instruction from a server based on the first voice data if the first confidence level is less than the first threshold.

According to a third aspect, an embodiment of this application provides a voice data processing method, applied to a first device, where the method includes:

obtaining first voice data; recognizing the first voice data to obtain a first recognition result and a first confidence level, where the first confidence level indicates a reliability degree of the first recognition result; and generating a first machine instruction based on the first recognition result if the first confidence level is greater than or equal to a first threshold.

In this embodiment of this application, when the first voice data is detected, a terminal device may recognize the first voice data to obtain the first recognition result and the first confidence level. The first confidence level may indicate a confidence level of the first recognition result. Therefore, for any first voice data detected by the terminal, the terminal device may generate the first machine instruction at a local end based on the first recognition result when the first confidence level is greater than or equal to the first threshold, that is, when the first recognition result has a high reliability degree, thereby saving bandwidth between the terminal device and the server, reducing load pressure on the server, and improving efficiency of processing the first voice data.

In some embodiments, the method further includes:

obtaining a second machine instruction from a second device based on the first voice data if the first confidence level is less than the first threshold.

In some embodiments, the first device may include a terminal device, and the second device may include a server.

According to a fourth aspect, an embodiment of this application provides a voice data processing apparatus. The apparatus has a function of implementing an action of the terminal device or the first device in the foregoing aspects and the possible implementations of the foregoing aspects.

The function may be implemented by hardware, or may be implemented by hardware executing corresponding software. The hardware or the software includes one or more modules or units corresponding to the foregoing function, such as a transceiver module or unit, a processing module or unit, and an obtaining module or unit.

According to a fifth aspect, an embodiment of this application provides an electronic device, including a memory and a processor. The memory is configured to store a computer program. The processor is configured to invoke the computer program to perform the method according to any embodiment in the first aspect, any embodiment in the second aspect, or any embodiment in the third aspect.

According to a sixth aspect, an embodiment of this application provides a chip system. The chip system includes a processor. The processor is coupled to a memory. The processor executes a computer program stored in the memory, to implement the method according to any embodiment in the first aspect, any embodiment in the second aspect, or any embodiment in the third aspect.

The chip system may be a single chip or a chip module including a plurality of chips.

According to a seventh aspect, an embodiment of this application provides a computer-readable storage medium, storing a computer program. When the computer program is executed by a processor, the method according to any embodiment in the first aspect is implemented. According to an eighth aspect, an embodiment of this application provides a computer program product. When the computer program product is run on an electronic device, the electronic device performs the method according to any embodiment in the first aspect, any embodiment in the second aspect, or any embodiment in the third aspect.

It may be understood that, for beneficial effects of the fourth aspect to the eighth aspect, refer to a related description in the first aspect. Details are not described herein again.

## BRIEF DESCRIPTION OF DRAWINGS

FIG. 1 is a diagram of a structure of an electronic device according to an embodiment of this application;
FIG. 2 is a diagram of a structure of a voice data processing system according to an embodiment of this application;
FIG. 3 is a diagram of a scenario of processing voice data according to an embodiment of this application;
FIG. 4A and FIG. 4B are a schematic flowchart of a voice data processing method according to an embodiment of this application;
FIG. 5A and FIG. 5B are a schematic flowchart of another voice data processing method according to an embodiment of this application;
FIG. 6A and FIG. 6B are a schematic flowchart of another voice data processing method according to an embodiment of this application;
FIG. 7A and FIG. 7B are a schematic flowchart of another voice data processing method according to an embodiment of this application;
FIG. 8A and FIG. 8B are a schematic flowchart of another voice data processing method according to an embodiment of this application;
FIG. 9 is a diagram of a display interface according to an embodiment of this application;
FIG. 10 is a diagram of another display interface according to an embodiment of this application; and
FIG. 11 is a schematic flowchart of another voice data processing method according to an embodiment of this application.

## DESCRIPTION OF EMBODIMENTS

A voice data processing method provided in embodiments of this application may be applied to an electronic device such as a mobile phone, a tablet computer, a wearable device, an on-board device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

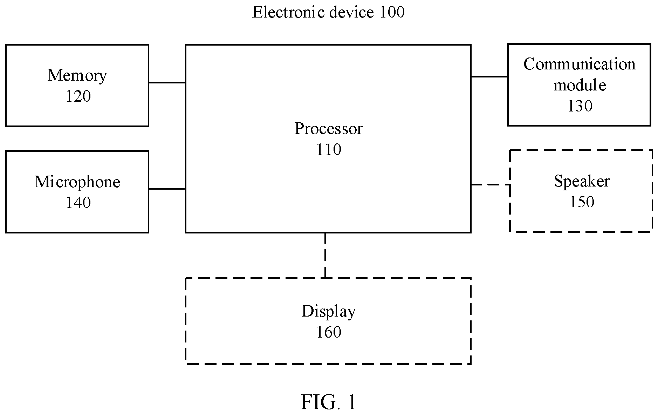

FIG. 1 is a diagram of a structure of an electronic device 100 according to an embodiment of this application. The electronic device 100 may include a processor 110, a memory 120, a communication module 130, a microphone 140, and the like.

The processor 110 may include one or more processing units. The memory 120 is configured to store program code and data. In this embodiment of this application, the processor 110 may execute computer-executable instructions stored in the memory 120, to control and manage an action of the electronic device 100.

The communication module 130 may be configured to implement communication between internal modules of the electronic device 100 or communication between the electronic device 100 and another external electronic device. For example, if the electronic device 100 communicates with another electronic device in a wired connection manner, the communication module 130 may include an interface, for example, a USB interface. The USB interface may be an interface that conforms to a USB standard specification, which may be specifically a mini USB interface, a micro USB interface, a USB Type-C interface, or the like. The USB interface may be configured to connect to a charger to charge the electronic device 100, or may be configured to perform data transmission between the electronic device 100 and a peripheral device, or may be configured to connect to a headset to play audio through the headset. The interface may alternatively be configured to connect to another electronic device, for example, an AR device.

Alternatively, the communication module 130 may include an audio component, a radio frequency circuit, a Bluetooth chip, a wireless fidelity (wireless fidelity, Wi-Fi) chip, a near-field communication (near-field communication, NFC) module, and the like, and may implement interaction between the electronic device 100 and another electronic device in various manners. The microphone 140 may be configured to obtain a sound signal in an environment around the electronic device 100. In some embodiments, the microphone 140 may be configured to obtain a voice of a user.

Optionally, the electronic device 100 may further include a speaker 150, and the speaker 150 may be configured to send a sound signal. In some embodiments, the electronic device 100 may implement a function of having a dialog with a user by using the microphone 140 and the speaker 150.

Optionally, the electronic device 100 may further include a display 160, and the display 160 may display an image, a video, or the like in a human-computer interaction interface.

It should be understood that, in addition to the various components or modules shown in FIG. 1, a structure of the electronic device 100 is not specifically limited in embodiments of this application. In some other embodiments of this application, the electronic device 100 may further include more or fewer components than those shown in the figure, some components may be combined, or some components may be split, or different component arrangements may be used. The components shown in the figure may be implemented by hardware, software, or a combination of software and hardware.

To facilitate understanding of the technical solutions in embodiments of this application, the following first describes application scenarios in embodiments of this application.

A user may trigger a session with a terminal device to interact with the terminal device, so that the terminal device performs an operation required by the user, including completing a task indicated by the user, chatting with the user, or the like.

In some embodiments, the user may trigger the session with the terminal device through a specific event, a voice, or a button. The foregoing three manners of triggering the session may be understood as that the user first "wakes up" a voice assistant application through the specific event, the voice, or the button, so that the terminal device determines that the session is to be started. Then, the terminal device may receive voice data of the user, and send the voice data to a server for processing. The server processes the voice data, and sends a corresponding machine instruction to the terminal device.

However, this interaction manner is complex and has poor user experience. Therefore, in some other embodiments, the user may not need to "wake up" the voice assistant application first, and the terminal device may obtain voice data of the user frequently or in real time, and process the voice data when determining that a response operation needs to be performed based on the voice data. In other words, the terminal device may process the voice data of the user in a wakeup-free scenario.

In the wakeup-free scenario, the user may directly say an operation that the user wants the terminal device to perform, which has high interaction efficiency and good user experience. The terminal device may send obtained voice data to the server, and then the server processes the voice data and feeds back a corresponding machine instruction. However, the terminal device may obtain a large amount of voice data, and there may also be a large quantity of terminal devices. This may cause a waste of bandwidth between the terminal device and the server, bring great load pressure to the server, and reduce a speed of a response to the user. Therefore, to resolve at least some of the foregoing technical problems, a voice data processing system and a voice data processing method are provided in embodiments of this application.

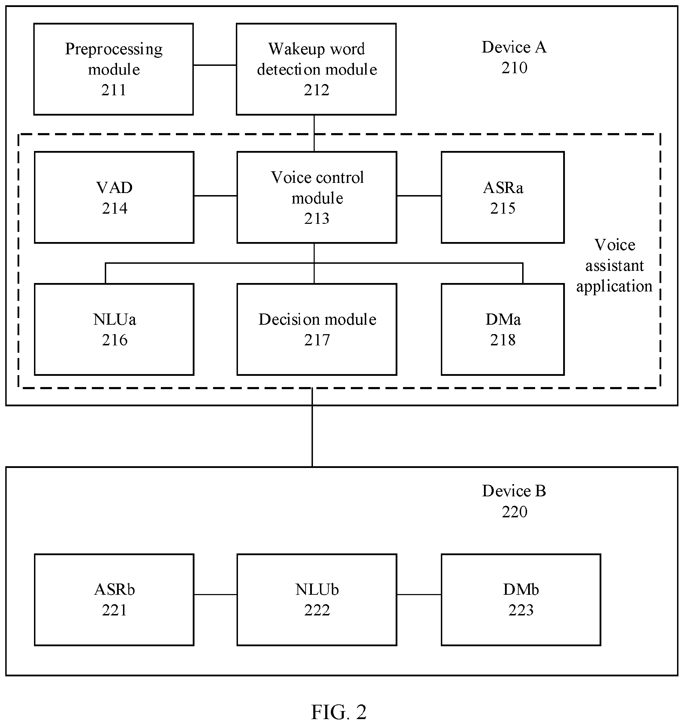

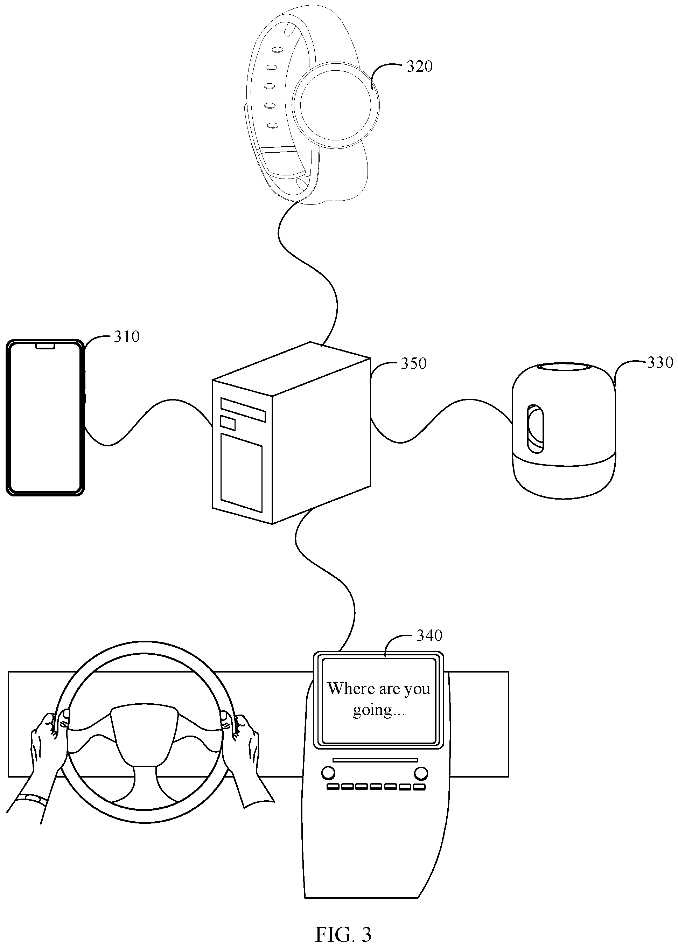

FIG. 2 shows a voice data processing system according to an embodiment of this application. The system includes a device A 210 and a device B 220, and the device A 210 and the device B 220 may be connected through a network. The device A 210 and the device B 220 may include at least a part of the structure of the electronic device 100. Both the device A 210 and the device B 220 can process voice data, but the device B 220 has a stronger device capability than the device A 210, or at least in terms of voice data processing, the device B 220 has a stronger processing capability than the device A 210, including being capable of recognizing voice data more accurately, obtaining a machine instruction with a higher reliability degree, and the like. In some embodiments, as shown in FIG. 3, the device A 210 may include terminal devices such as a mobile terminal 310, a smartwatch 320, a smart speaker 330, and an on-board device 340, and the device B 220 includes a server 350.

The device A 210 may include a preprocessing module 211, a wakeup word detection module 212, a voice control module 213, voice activity detection (voice activity detection, VAD) 214, automatic speech recognition (automatic speech recognition, ASR) a 215, natural language understanding (Natural Language Understanding, NLU) a 216, a decision module 217, and dialog management (Dialog Management, DM) a 218. In some embodiments, the preprocessing module 211 and the wakeup word detection module 212 may be implemented by an operating system installed in the device A 210. The voice control module 213, the VAD 214, the ASRa 215, the NLUa 216, the decision module 217, and the DMa 218 may be included in a voice assistant application. The device A 210 may download and install the voice assistant application, and then process voice data by using at least some of these modules. In some embodiments, the voice assistant application may be an application provided by a manufacturer of a terminal device, a manufacturer of an operating system, or another person.

The preprocessing module 211 may be configured to preprocess collected original voice data. In some embodiments, the preprocessing module 211 may reduce or remove an interference signal in the original voice data. The interference signal may include noise emitted by another object in a user environment, a sound played by a speaker of the device A 210, noise generated by a physical structure of a microphone in a sound reception process, and the like. In some embodiments, the preprocessing module 211 may determine related data required in a subsequent step of processing the voice data, for example, a sound source location corresponding to the voice data, and a microphone for receiving the voice data.

The wakeup word detection module 212 may also be referred to as a keyword detection module. The wakeup word detection module 212 may start the voice assistant application when a preset wakeup word is detected from the voice data, to further process the voice data by using the voice assistant application. In some embodiments, the wakeup word detection module 212 may receive an audio feature that is input by the user and that corresponds to the preset wakeup word, and match an audio feature (for example, a frequency) of the voice data with the audio feature corresponding to the preset wakeup word. If the audio feature of the voice data includes the audio feature corresponding to the preset wakeup word, it is determined that the preset wakeup word is detected. If the audio feature of the voice data does not include the audio feature corresponding to the preset wakeup word, it is determined that the preset wakeup word is not detected.

The voice control module 213 may be understood as a control center in the voice assistant application, and is configured to schedule and coordinate running of other modules such as the VAD 214, the ASRa 215, the NLUa 216, the decision module 217, and the DMa 218 in the voice assistant application. In some embodiments, the voice control module 213 may include one or more data interfaces. The voice control module 213 may implement interaction between the voice assistant application and another application such as the wakeup word detection module 212 in the device A 210 through these data interfaces. In some embodiments, the voice control module 213 may include a first data interface, a second data interface, and a third data interface. The first data interface may be configured to obtain voice data provided by the terminal device. The second data interface may be configured to provide, for the terminal device, at least a part of data obtained by processing the voice data, for example, a machine instruction. The third data interface may be configured for the voice control module 213 to communicate with the device B 220.

The VAD 214 may also be referred to as a voice endpoint detection module or a voice boundary module. The VAD 214 may be configured to recognize, from the voice data, a part that actually includes a user voice, and may further delete a part that does not include the user voice, thereby reducing a volume of data to be processed subsequently. In some embodiments, if the VAD 214 determines that the voice data does not include the user voice, subsequent processing may not be performed on the voice data, that is, the voice data is discarded.

In some embodiments, when the VAD 214 determines that the voice data includes the user voice, a session identifier may be further added to the voice data. The session identifier may indicate a session to which the voice data belongs. In some embodiments, when the VAD 214 determines that the voice data includes the user voice, a round identifier may be further added to the voice data. The round identifier may indicate a round of the voice data in the session. The session may be a continuous dialog between the user and the device A 210, and one session may include at least one round of dialog. In some embodiments, when the VAD 214 determines that the voice data includes the user voice, a triggering type identifier may be further added to the voice data. The triggering type identifier may indicate a triggering manner of the session. In some embodiments, the triggering manner of the session may include event wakeup triggering, voice wakeup triggering, button wakeup triggering, and wakeup-free triggering. The event wakeup triggering means that the device A 210 wakes up the voice assistant application when a specific event is detected, to process the voice data. The voice wakeup triggering means that the user says a preset wakeup word to wake up the voice assistant application to process the voice data. The button wakeup triggering means that the user clicks/taps a specific button to wake up the voice assistant to process the voice data. The wakeup-free triggering means that the device A 210 processes the voice data without waking up the voice assistant.

The ASRa 215 may be configured to convert the voice data into text data. In some embodiments, the ASRa 215 may convert the voice data into a letter sequence, and then combine letters included in the letter sequence to obtain a word or a corresponding Chinese character.

In some embodiments, the device A 210 further includes an entity set 1 corresponding to the ASRa 215, and the entity set 1 may include at least one entity (which may also be referred to as a semantic entity). The entity may be a noun representing an exact object. For example, "people", "car", "city", "weather", and "dining room" may all be used as entities. In some embodiments, the entity set 1 may be an array including at least one entity item, and each entity item may include a standard name and a synonym that correspond to a same entity. The standard name may be an official name, a formal name, or a well-known name, and the synonym may be a common name, a slang name, a privately customized name, or the like. The ASRa 215 may determine the text data corresponding to the voice data based on the entity included in the entity set 1, thereby improving accuracy of converting the voice data into the text data. For example, the entity set 1 includes "dining room". A letter sequence obtained by converting the voice data by the ASRa 215 includes " c, a, n, t, i, n, g", and the letter sequence is combined to obtain a pinyin combination "can, ting". There are many Chinese characters whose pinyin is "can" and "ting". It is difficult for the ASRa 215 to determine, based on only the pinyin combination, what actually corresponding Chinese characters are. However, as the entity set 1 includes "dining room", the ASRa 215 may determine that Chinese characters corresponding to the pinyin combination are "dining room".

In some embodiments, the ASRa 215 may further determine a confidence level 1 corresponding to the text data obtained through conversion. The confidence level 1 indicates a reliability degree of the text data. In some embodiments, the ASRa 215 may further determine indication information 1 corresponding to the text data obtained through conversion. The indication information 1 may indicate whether the text data includes the entity in the entity set 1.

The NLUa 216 may be configured to determine corresponding intent data based on the text data. The intent data may be for describing an operation requested by the voice data, that is, an operation required by the user. In some embodiments, the intent data may include at least one parameter of an intent and a slot value. The intent may be for describing a type of the operation. In some embodiments, the intent may be understood as a verb included in the voice data. The slot value may be a specific parameter of the operation. For example, the text data is "navigate to hotel XX". The NLUa 216 recognizes the text data, and determines that the intent is "navigate" and the slot value is "hotel XX".

In some embodiments, the device A 210 further includes an entity set 2 corresponding to the NLUa 216, and the entity set 2 may include at least one entity. The NLUa 216 may determine the intent data corresponding to the text data based on the entity included in the entity set 2. In some embodiments, the entity set 2 and the entity set 1 may include at least one same entity. In some embodiments, the entity set 2 and the entity set 1 may be a same entity set.

In some embodiments, the NLUa 216 may further determine a confidence level 2 corresponding to the intent data. The confidence level 2 may indicate a reliability degree of the intent data. In some embodiments, the NLUa 216 may further determine indication information 2 corresponding to the intent data. The indication information 2 may indicate whether the text data includes the intent. In some embodiments, the NLUa 216 may further determine indication information 3 corresponding to the intent data. The indication information 3 may indicate whether the text data includes the slot value.

The decision module 217 may be configured to determine whether to process the voice data locally on the device A 210 or request the device B 220 to process the voice data. In some embodiments, the decision module 217 may determine, based on a confidence level corresponding to the intent data or the text data determined by the ASRa 215, whether to continue to process the voice data locally on the device A 210 or request the device B 220 to process the voice data. If the confidence level is high, the voice data may continue to be processed locally on the device A 210, to save bandwidth between the device A 210 and the device B 220, reduce load pressure on the device B 220, and increase a speed of processing the voice data. If the confidence level is low, the device B 220 may be requested to process the voice data, to improve accuracy of processing the voice data. The DMa 218 may control a human-computer dialog process. In some embodiments, the DMa 218 may generate a corresponding machine instruction based on the intent data. In some embodiments, if the intent data is incomplete, for example, the slot value is not specified, the DMa 218 may trigger a plurality of rounds of dialogs to further obtain complete intent data. Although the intent data has a specific structure, it still belongs to a human language. Therefore, to facilitate the device A 210 to specifically perform an operation required by the user, a machine instruction (that is, a machine language) corresponding to the intent data may be generated, so that the electronic device executes the execution to implement the operation required by the user.

The device B 220 may include ASRb 221, NLUb 222, and DMb 223. A function of the ASRb 221 may be similar to the function of the ASRa 215, a function of the NLUb 222 may be similar to the function of the NLUa 216, and a function of the DMb 223 may be similar to the function of the DMa 218. In some embodiments, the ASRb 221 may have a stronger processing capability than the ASRa 215, the NLUb 222 may have a stronger processing capability than the NLUa 216, and the DMb 223 may have a stronger processing capability than the DMa 218.

In some embodiments, the device B 220 further stores an entity set 3 corresponding to the ASRb 221. The entity set 3 may include at least one entity. In some embodiments, the entity set 3 may include more entities than the entity set 1.

In some embodiments, the device B 220 further stores an entity set 4 corresponding to the NLUb 222. The entity set 4 may include at least one entity. The entity set 4 may include at least one entity. In some embodiments, the entity set 4 may include more entities than the entity set 2.

In some embodiments, the entity set 4 and the entity set 3 may include at least one same entity. In some embodiments, the entity set 4 and the entity set 3 may be a same entity set.

In some embodiments, the VAD 214, the ASRa 215, the NLUa 216, the decision module 217, the DMa 218, the ASRb 221, the NLUb 222, and the DMb 223 may be implemented by using a machine learning model.

In some embodiments, the device A 210 and the device B 220 may include more or fewer modules than those shown in FIG. 2.

In some embodiments, the device A 210 may further include a natural language generation (natural language generation, NLG) module and a speech synthesis (text to speech, TTS) module. The NLG module may generate corresponding text data based on a machine instruction executed by the device A 210 or a status change. The TTS module may have a function opposite to that of the ASRa 215. The TTS module may be configured to generate corresponding voice data based on the text data. The NLG module, the TTS module, the NLUa 216, the ASRa 215, and the DMa 218 may be combined to implement a function of a dialog between the device A 210 and the user.

In some embodiments, the device B 220 may also include a module similar to or the same as another module in the device A 210.

In some embodiments, a plurality of modules included in the device A 210 may be aggregated into fewer modules, or each module may be further split into more modules. Similarly, a plurality of modules included in the device B 220 may be aggregated into fewer modules, or each module may be further split into more modules.

In some embodiments, a function of at least one module included in the voice assistant application in the device A 210 may alternatively be implemented by the operating system of the device A 210. For example, the voice assistant application may preprocess the voice data. In some embodiments, at least one module included in the voice assistant application in the device A 210 may alternatively implement at least some functions implemented by the operating system of the device A 210.

The following describes functions of the modules of the devices in the system shown in FIG. 2 with reference to specific examples.

The device A 210 obtains voice data 1 of a user through recording using a microphone. The device A 210 preprocesses the voice data 1 by using the preprocessing module 211, for example, performs noise reduction. The preprocessed voice data 1 may include at least one of a preset wakeup word and a user intent. The wakeup word may be a name of a voice assistant.

The device A 210 detects, by using the wakeup word detection module 212, whether the voice data 1 includes the preset wakeup word "Celia", where Celia is a name of a voice assistant application. If the voice data 1 does not include "Celia", the voice assistant application is not woken up. In addition, if the device A 210 detects that there is no any other manner of waking up the voice assistant application, such as a specific event or a specific button operation, it may be determined that the voice data 1 is a dialog in a session triggered in a wakeup-free manner. The device A may process the voice data 1 at a local end of the device A 210 by using the voice assistant application. The device A 210 controls, by using the voice control module 213 in the voice assistant application, another module in the voice assistant to process the voice data 1. The device A 210 may first detect, by using the VAD 214, whether the voice data 1 includes a user voice. If the voice data 1 includes the user voice, it is determined by using the ASRa 215 that text data 1 corresponding to the voice data 1 is: navigate to hotel XX. The device A 210 continues to process the text data 1 by using the NLUa 216, to obtain intent data 1, including an intent of "navigate", a slot value of "hotel XX", and a confidence level of 90%. The device A 210 determines, by using the decision module 217 based on the confidence level, whether to request the device B 220 to process the voice data again. If the confidence level is high, for example, greater than or equal to 70%, the device A 210 generates a machine instruction 1 corresponding to the intent data 1 by using the DMa 218, and starts a navigation application based on the machine instruction 1, to start navigation to the hotel XX. If the confidence level is low, for example, less than 70%, the device A 210 sends the voice data 1 or the text data 1 to the device B 220. The device B 220 recognizes the voice data 1 or the text data 1 again by using the ASRb 221, the NLUb 222, and the DMb 223, and sends a machine instruction 2 to the device A 210. The machine instruction 2 and the machine instruction 1 may be similar or the same.

The following describes in detail the technical solutions of this application using specific embodiments. The following several specific embodiments may be combined with each other. A similar or same concept or process may not be described again in some embodiments.

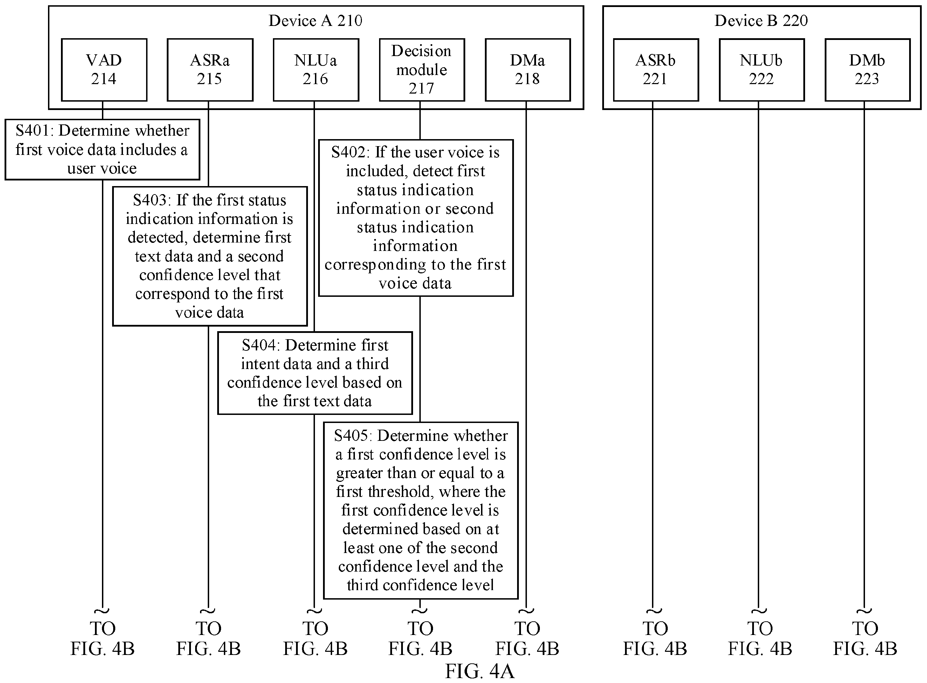

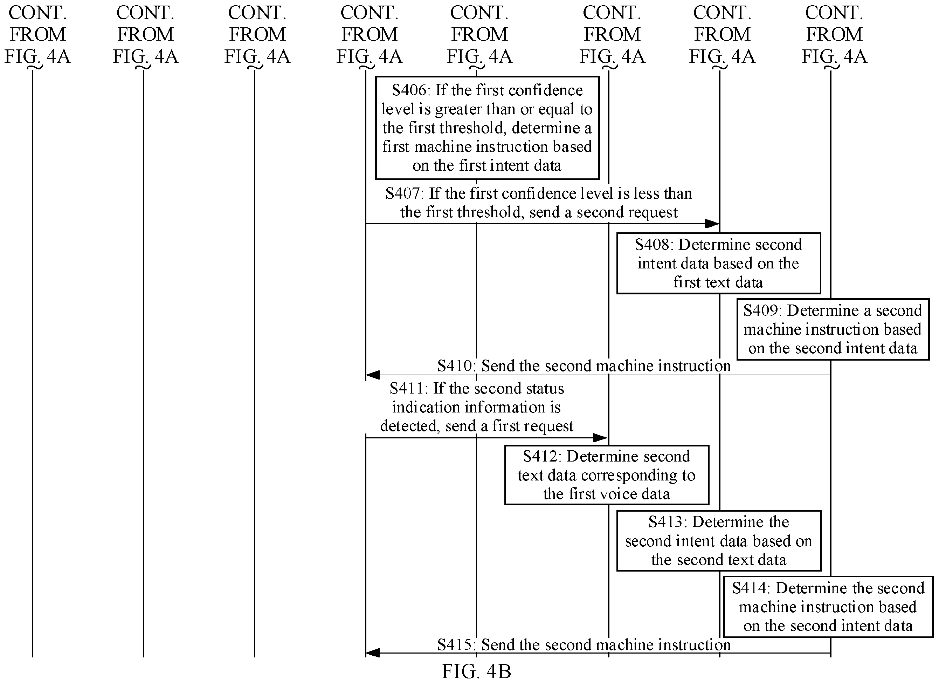

FIG. 4A and FIG. 4B are a flowchart of a voice data processing method according to an embodiment of this application. A first recognition result may include first intent data, and may further include first text data. A first model may include a third model, and may further include a second model. A first entity set may include a third set, and may further include a second entity set. A second entity may include an entity in the third entity set, and may further include an entity in the second entity set. A first confidence level may be determined based on at least one of a second confidence level and a third confidence level. A second recognition result may include second intent data. A first entity may include an entity in a fourth entity set. It is to be noted that the method is not limited to a specific sequence in FIG. 4A and FIG. 4B and the following descriptions. It should be understood that, in other embodiments, ranks of some steps in the method may be interchanged based on an actual requirement, or some steps in the method may be omitted or deleted. The method includes the following steps:

S401: When first voice data is detected, the device A 210 determines whether the first voice data includes a user voice. If the first voice data includes the user voice, perform S402. If the first voice data does not include the user voice, end the process.

The device A 210 may perform S401 by using the VAD 214.

If the first voice data does not include the user voice, the first voice data may not be said by the user to the device A 210. For example, the first voice data may be noise in an environment around the device A 210. In this case, the first voice data may not be processed.

In some embodiments, the first voice data may be voice data that may be obtained by the device A 210 by using a microphone. In some embodiments, the first voice data may be voice data that may be obtained by the device A 210 in real time and continuously by using a microphone. In some embodiments, the first voice data may be voice data obtained and preprocessed by the device A 210. A preprocessing manner may include noise reduction, human voice enhancement, and the like. Certainly, during actual application, the preprocessing manner may further include more or fewer manners. The preprocessing manner is not limited in embodiments of this application.

In some embodiments, the device A 210 may filter out, from the first voice data, at least a part of voice data that does not include a human voice.

In some embodiments, if there is no unterminated second session before the first voice data, and the device A 210 detects no event corresponding to event wakeup triggering, no button operation corresponding to button wakeup triggering, and no preset wakeup word in the first voice data, first status indication information corresponding to the first voice data may be generated. The first status indication information may indicate that the first voice data is a first round of dialog in a first session and the first session is a session triggered in a wakeup-free manner. In some embodiments, the device A 210 may add the first status indication information to the first voice data, or the device A 210 may encapsulate the first voice data and the first status indication information in a same data packet, or the device A 210 may correspondingly store the first voice data and the first status indication information.

In some embodiments, the first status indication information may include a first session identifier, a first round identifier, and a first triggering type. A session corresponding to the first session identifier is the first session. The first round identifier indicates that the first voice data is the first round of dialog. The first triggering type identifier indicates that the first session is triggered in a wakeup-free manner.

In some embodiments, if there is an unterminated second session before the first voice data, and/or the device A 210 detects any one of a preset wakeup word included in the first voice data, an event corresponding to event wakeup triggering, and a button operation corresponding to button wakeup triggering, second status indication information corresponding to the first voice data is generated. The second status indication information may indicate that the first voice data is an $N^{th}$ round of dialog in a second session, and/or a triggering manner of the second session is voice wakeup triggering, event wakeup triggering, or button wakeup triggering, where N is an integer greater than 1. In some embodiments, the device A 210 may add the second status indication information to the first voice data, or the device A 210 may encapsulate the first voice data and the second status indication information in a same data packet, or the device A 210 may correspondingly store the first voice data and the second status indication information.

In some embodiments, the second status indication information may include a second session identifier and a second round identifier. The second session identifier corresponds to the second session. The second round identifier indicates that the first voice data is an $N^{th}$ round of dialog. In some embodiments, the second status indication information may include a second triggering type identifier. The second triggering type identifier may indicate that the triggering manner of the second session is voice wakeup triggering, event wakeup triggering, or button wakeup triggering. S402: The device A 210 detects first status indication information or second status indication information corresponding to the first voice data. If the first status indication information is detected, S403 is performed. If the second status indication information is detected, S411 is performed.

The device A 210 may perform S402 by using the decision module 217.

In some embodiments, the device A 210 may detect that the first voice data carries the first status indication information or the second status indication information; or the device A 210 may obtain the first status indication information or the second status indication information from a data packet in which the first voice data is located; or the device A 210 may obtain the first status indication information or the second status indication information that is stored corresponding to the first voice data.

It is to be noted that S402 is performed to determine whether the first voice data is the first round of dialog in the session triggered in the wakeup-free manner. It may be understood that, during actual application, the device A 210 may alternatively determine, in another manner, whether the first voice data is the first round of dialog in the session triggered in the wakeup-free manner. For example, in some other embodiments, the device A may include the second status indication information or may not include the second status indication information. When the second status indication information corresponding to the first voice data is not detected, the device A 210 may determine that the first voice data is the first round of dialog in the session triggered in the wakeup-free manner.

S403: The device A 210 determines first text data and a second confidence level that correspond to the first voice data.

The device A 210 may perform S403 by using the ASRa 215. In some embodiments, the device A 210 may determine, based on a second model, the first text data and the second confidence level that correspond to the first voice data. The device A 210 may input the first voice data to the second model, to obtain the first text data and the second confidence level that are output by the second model. In some embodiments, the second model may be equivalent to the ASRa 215.

The second confidence level may indicate a reliability degree of the first text data.

In some embodiments, the device A 210 includes a second entity set, and the second entity set may include at least one entity. The device A 210 may determine, based on a first entity set, the first text data and the second confidence level that correspond to the first voice data.

In some embodiments, the device A 210 may further determine first process indication information corresponding to the first text data. The first process indication information may indicate whether the first text data includes the entity in the second entity set. In some embodiments, the first process indication information may be a preset first value or second value. When the first process indication information is the first value, it may indicate that the first text data includes the entity in the second entity set, that is, the entity in the second entity set is hit. When the first process indication information is the second value, it may indicate that the first text data does not include the entity in the second entity set, that is, the entity in the second entity set is not hit. In some embodiments, the first value may be 1, and the second value may be 0.

S404: The device A 210 determines, based on the first text data, first intent data and a third confidence level that correspond to the first voice data.

The device A 210 may perform S404 by using the NLUa 216. In some embodiments, the device A 210 may determine, based on a third model, the first intent data and the third confidence level that correspond to the first voice data. The device A 210 may input the first text data to the third model, to obtain the first intent data and the third confidence level that are output by the third model. In some embodiments, the third model may be equivalent to the NLUa 216.

The first intent data may indicate an operation requested by the first voice data. The third confidence level may indicate a reliability degree of the first intent data.

In some embodiments, the first intent data may include at least one of a first intent and a first slot value. The first intent is for describing a type of the operation. The first slot value may be a parameter corresponding to the operation.

In some embodiments, the device A 210 includes a third entity set, and the third entity set may include at least one entity. The device A 210 may determine, based on the third entity set, the first intent data and the third confidence level that correspond to the first voice data. In some embodiments, the device A 210 may determine second process indication information and third process indication information that correspond to the first intent data. The second process indication information may indicate whether the first intent data includes the first intent. The third process indication information may indicate whether the first intent data includes the first slot value.

In some embodiments, the second entity set and the third entity set may include at least one same entity.

In some embodiments, the second process indication information may be a preset third value or fourth value. When the second process indication information is the third value, it may indicate that the first intent data includes the first intent. When the second process indication information is the fourth value, it may indicate that the first intent data includes the first intent. In some embodiments, the third value may be 1, and the fourth value may be 0.

In some embodiments, the third process indication information may be a preset fifth value or sixth value. When the third process indication information is the fifth value, it may indicate that the first intent data includes the first slot value. When the second process indication information is the sixth value, it may indicate that the first intent data includes the first slot value. In some embodiments, the fifth value may be 1, and the sixth value may be 0.

In some embodiments, processing is performed in S404 based on a processing result in S403, and the processing result in S403 is transferred to a processing result in S404. In this case, the second confidence level may reflect the third confidence level to some extent, and the third confidence level may also reflect the second confidence level to some extent, so that either of the second confidence level and the third confidence level may be omitted.

S405: The device A 210 determines whether a first confidence level is greater than or equal to a first threshold. If the first confidence level is greater than or equal to the first threshold, perform S406. If the first confidence level is less than the first threshold, perform S407.

The device A 210 may perform S405 by using the decision module 217.

In some embodiments, the device A 210 may determine the first confidence level through the following formula 1 based on at least one of the second confidence level and the third confidence level, or determine the third confidence level based on at least one of the second confidence level and the third confidence level and at least one of the first process indication information, the second process indication information, and the third process indication information.

$$Z=a*X+b*Y+c*(O+P+Q) \tag{1}$$

In this formula, Z represents the first confidence level, X represents the second confidence level, a represents a first weight, Y represents the third confidence level, b represents a second weight, O, P, and Q respectively represent the first process indication information, the second process indication information, and the third process indication information, values of O, P, and Q are all 0 or 1, and c represents a third weight. In some embodiments, a and b may be greater than c. In some embodiments, b may be greater than a. In some embodiments, a + b = 0.8, and c = 0.2. In addition, it may be understood that, during actual application, the first weight, the second weight, and the third weight may alternatively be other values.

In some embodiments, the device A 210 may determine the first confidence level through the following formula 2 based on at least one of the second process indication information, the second process indication information, and the third process indication information, the second confidence level, and the third confidence level.

$$Z=a*X*Y+c*(O+P+Q) \tag{2}$$

In this formula, Z represents the first confidence level, X represents the second confidence level, Y represents the third confidence level, a represents a first weight, O, P, and Q respectively represent the first process indication information, the second process indication information, and the third process indication information, values of O, P, and Q are all 0 or 1, and c represents a third weight. In some embodiments, a may be greater than c. In some embodiments, a = 0.8, and c = 0.2. In addition, it may be understood that, during actual application, the first weight and the third weight may alternatively be other values.

In some embodiments, a data type of the first threshold may be the same as a data type of the first confidence level. In some embodiments, the first confidence level is a value from 0 to 100, and the first threshold may be any value from 70 to 90. For example, the first threshold may be 70, 80, or 90. Certainly, during actual application, the first threshold may be another value. A value of the first threshold is not limited in embodiments of this application.

In some embodiments, when determining that the second process indication information is the third value, that is, the first intent data does not include the first intent, the device A 210 may not continue to perform a subsequent step, that is, discard the first voice data.

In some embodiments, when determining that the first confidence level is less than a second threshold, the device A 210 may not continue to perform a subsequent step, that is, discard the first voice data. When it is determined that the first confidence level is greater than or equal to the second threshold and is less than the first threshold, perform S407. When the first confidence level is greater than or equal to the first threshold, perform S406. The second threshold is less than the first threshold.

It is to be noted that a data type of the second threshold may be the same as a data type of the first threshold. In some embodiments, the second confidence level is a value from 0 to 100, and the second threshold may be any value from 0 to 50. For example, the second threshold may be 30, 40, or 50. Certainly, during actual application, the second threshold may be another value. A value of the second threshold is not limited in embodiments of this application.

S406: The device A 210 determines a first machine instruction corresponding to the first voice data based on the first intent data.

The device A 210 may perform S406 by using the DMa 218.

As the first confidence level is greater than or equal to the first threshold, that is, the first intent data has a high reliability degree, the device A 210 can accurately determine an operation required to be performed. In this case, the device A 210 continues to determine the first machine instruction at a local end based on the first intent data, without requesting the device B 220 to process the voice data. This can save bandwidth between the device A 210 and the device B 220, reduce load pressure on the device B 220, and improve human-computer interaction efficiency.

The first machine instruction may indicate an action performed by the device A 210 in response to the first voice data.

S407: The device A 210 sends a second request to the device B 220.

As the first confidence level is low, it may be difficult for the device A 210 to accurately determine an operation required by the user. In this case, the device B 220 may be requested to process the first voice data, to improve accuracy of processing the first voice data.

The second request is for making a request to recognize the first text data corresponding to the first voice data.

In some embodiments, the device A 210 may simultaneously send the second request and the first text data to the device B 220. In some embodiments, the second request carries the first text data. In some embodiments, the device A 210 may separately send the second request and the first text data to the device B 220 at different moments. In some embodiments, the device A 210 may send the first text data to the device B 220 at any moment after determining the first text data in S403 and before sending the second request to the device B 220 in S407. Therefore, the second request may not carry the first text data. Before sending the second request through S407, the device A 210 sends the first text data to the device B 220 in advance. In this case, if it is determined through S405 that the device B 220 needs to continue to process the first text data, the first text data does not need to be sent again, thereby improving efficiency of processing the first voice data.

In some embodiments, the device A 210 may further send the first intent data to the device B 220. In some embodiments, the second request may further carry the first intent data.

S408: The device B 220 determines second intent data corresponding to the first voice data based on the first text data.

The device B may perform S408 by using the NLUb 222. In some embodiments, the device B 220 may determine the second intent data corresponding to the first voice data based on a fourth model. The device B 220 may input the first text data to the fourth model, to obtain the second intent data output by the fourth model. In some embodiments, the fourth model may be equivalent to the NLUb 222.

In some embodiments, the device B 220 may include a fourth entity set, and the fourth entity set may include at least one entity. The device B 220 may determine the second intent data corresponding to the first voice data based on the fourth entity set.

In some embodiments, the fourth entity set may include more entities than the third entity set. In some embodiments, the fourth entity set may include at least some entities in the third entity set. In some embodiments, the second intent data may include at least one of a second intent and a second slot value. In addition, it is to be noted that, as both the second intent data and the first intent data are obtained by recognizing the first text data, the second intent data and the first intent data may be similar or the same.

S409: The device B 220 determines a second machine instruction corresponding to the first voice data based on the second intent data.

The device B 220 may perform S409 by using the DMb 223.

It is to be noted that a manner in which the device B 220 performs S408 and S409 may be similar to or the same as the manner in which the device A 210 performs S404 and S406. Details are not described herein again.

It is to be further noted that, as the second intent data and the first intent data may be similar or the same, the second machine instruction and the first machine instruction may be similar or the same. S410: The device B 220 sends the second machine instruction to the device A 210.

In some embodiments, the device B 220 may send a first entity to the device A 210. The device A 210 may add the first entity to at least one of the second entity set and the third entity set. The first entity may be an entity obtained by recognizing the first text data by the device B 220, or the first entity may be an entity included in the second intent data and the fourth entity set.

In some embodiments, the device B 220 may send the second intent data to the device A 210. The device A 210 may update the third model based on the second intent data, so that the updated third model has a more accurate recognition capability. In some embodiments, the device A 210 may use the first text data as a sample, use the second intent data as a marker of the first text data, and train the third model based on the first text data and the second intent data.

In some embodiments, the device B 220 may send the second intent data to the device A 210, but does not send the second machine instruction, and the device A 210 generates the second machine instruction based on the received second intent data.

S411: The device A 210 sends a first request to the device B 220.

The first request carries the first voice data. The first request may be for making a request to recognize the first voice data.

Because the first voice data carries the second status indication information, the first voice data is either the $N^{th}$ round of dialog or a dialog in a session triggered in a manner other than a wakeup-free manner, for example, voice wakeup triggering, event wakeup triggering, or button wakeup triggering. In this case, the device A 210 may determine that the user is currently in a dialog with the device A 210, and then may request the device B 220 to process the first voice data, to improve accuracy of processing the first voice data.

S412: The device B 220 determines second text data corresponding to the first voice data.

The device B 220 may perform S412 by using the ASRb 221. In some embodiments, the device B 220 may determine the second text data corresponding to the first voice data based on a fifth model. The device B 220 may input the first voice data to the fifth model, to obtain the second text data output by the fifth model. In some embodiments, the fifth model may be equivalent to the ASRb 221.

In some embodiments, the device B 220 may include a fifth entity set, and the fifth entity set may include at least one entity. The device B 220 may determine the second text data corresponding to the first voice data based on the fifth entity set.

In some embodiments, the fifth entity set may include more entities than the second entity set. In some embodiments, the fifth entity set may include at least some entities in the second entity set. S413: The device B 220 determines the second intent data corresponding to the first voice data based on the second text data.

The device B 220 may perform S413 by using the NLUb 222.

S414: The device B 220 determines the second machine instruction corresponding to the first voice data based on the second intent data.

The device B 220 may perform S414 by using the DMb 223.

S415: The device B 220 sends the second machine instruction to the device A 210.

It is to be noted that a manner in which the device B 220 performs S412 to S414 may be similar to or the same as the manner in which the device A 210 performs S403, S404, and S406, and a manner in which the device B 220 performs S415 may be similar to or the same as the manner in which the device B 220 performs S410. Details are not described herein again.

In this embodiment of this application, after processing the first voice data to obtain the first text data and the first intent data, the device A 210 may send the first text data to the device B 220, and determine, based on the reliability degree of the first intent data, whether to continue to process the first voice data at the local end of the device A 210 or request the device B 220 to process the first voice data. The first voice data can continue to be processed at the local end of the device A 210 when the reliability degree of the first intent data is high, and the device B 220 can be requested to recognize the first text data again when the reliability degree of the first intent data is low. Therefore, bandwidth between the device A 210 and the device B 220 is saved, load pressure on the device B 220 is reduced, and efficiency of processing the first voice data is improved. In addition, it may be understood that, as the first intent data is obtained by processing the first text data, the reliability degree of the first intent data may also be understood as an overall reliability degree of the first intent data and the first text data.

For example, when the user of the device A 210 says "navigate to the front door of hotel A" to the device A 210, corresponding first voice data is detected by the device A 210. The VAD 214 detects the first voice data, and determines that the first voice data includes a user voice and the first voice data is the first round of dialog in a session triggered in a wakeup-free manner. The ASRa 215 recognizes the first voice data to obtain first text data of "navigate to hotel A" and a second confidence level of 90%. The NLUa 216 recognizes the first text data to obtain first intent data of "intent: navigate; slot value: hotel A" and a third confidence level of 90%. The decision module 217 multiplies the second confidence level by the third confidence level, to obtain a first confidence level of 81%.

If a first threshold is 80%, as 81% is greater than 80%, a reliability degree of the first intent data is high. The decision module 217 determines that the device A 210 continues to process a subsequent step. The DMa 218 generates a first machine instruction based on the first intent data. The voice control module 213 starts a navigation application. The navigation application executes the first machine instruction to start navigation, and the navigation ends at the hotel A.

If a first threshold is 90%, as 81% is less than 90%, a reliability degree of the first intent data is low. The decision module 217 determines that the device B 220 performs recognition again. The device A 210 sends the first text data to the device B 220. The NLUb 222 recognizes the first text data to obtain second intent data of "intent: navigate; slot value: hotel A". The DMb 223 generates a second machine instruction based on the second intent data. The device B 220 sends the second machine instruction to the device A 210. The voice control module 213 starts a navigation application. The navigation application executes the second machine instruction to start navigation, and the navigation ends at the hotel A.

It is to be further noted that, in some other embodiments, the first status indication information may include only the first triggering type identifier, and the second status indication information may include only the second triggering type identifier. In other words, when the user wakes up the voice assistant application in any wakeup manner such as a specific event, a button operation, or a preset wakeup word, no matter which round of voice data the first voice data is, the device A 210 directly requests, through S411, the device B 220 to process the first voice data. For the first voice data in a wakeup-free case, no matter which round of voice data the first voice data is, the device A 210 first attempts, through S403 to S406, to process the first voice data at the local end of the device A 210, and then performs S407 to request the device B 220 to process the first voice data when a reliability degree of a recognition result is not high.

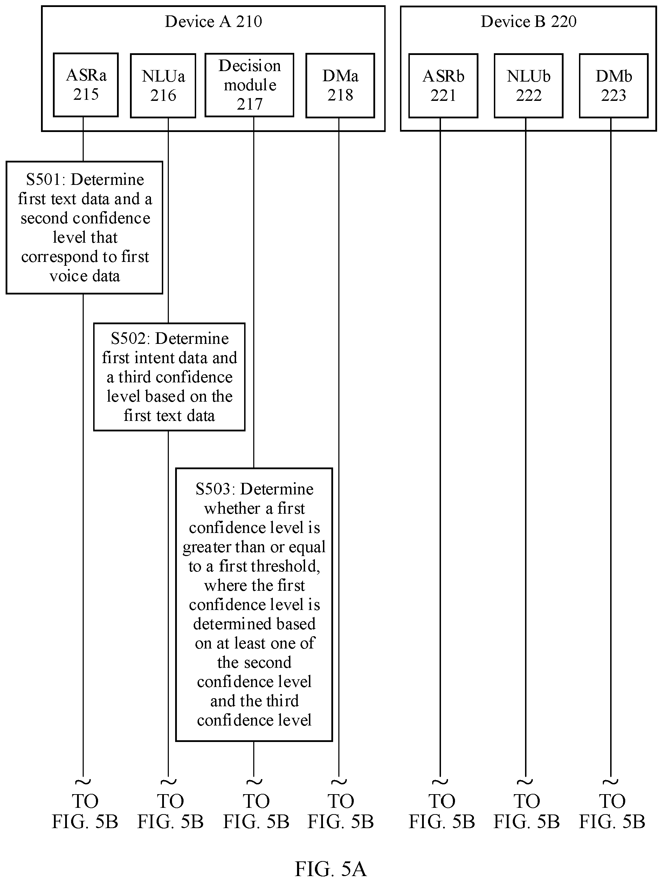

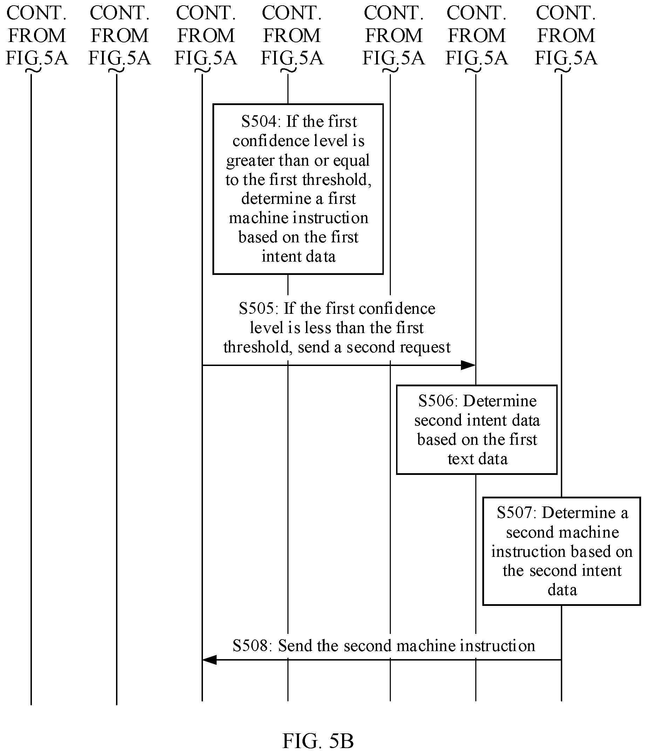

FIG. 5A and FIG. 5B are a flowchart of a voice data processing method according to an embodiment of this application. A first recognition result may include first intent data, and may further include first text data. A first model may include a third model, and may further include a second model. A first entity set may include a third set, and may further include a second entity set. A second entity may include an entity in the third entity set, and may further include an entity in the second entity set. A first confidence level may be determined based on at least one of a second confidence level and a third confidence level. A second recognition result may include second intent data. A first entity may include an entity in a fourth entity set. It is to be noted that the method is not limited to a specific sequence in FIG. 5A and FIG. 5B and the following descriptions. It should be understood that, in other embodiments, ranks of some steps in the method may be interchanged based on an actual requirement, or some steps in the method may be omitted or deleted. The method includes the following steps:

S501: When first voice data is detected by the device A 210, the device A 210 determines first text data and a second confidence level that correspond to the first voice data.

The device A 210 may perform S501 by using the ASRa 215.

S502: The device A 210 determines, based on the first text data, first intent data and a third confidence level that correspond to the first voice data.

The device A 210 may perform S502 by using the NLUa 216.

S503: The device A 210 determines whether a first confidence level is greater than or equal to a first threshold. If the first confidence level is greater than or equal to the first threshold, perform S504. If the first confidence level is less than the first threshold, perform S505.

The device A 210 may perform S503 by using the decision module 217.

S504: The device A 210 determines a first machine instruction corresponding to the first voice data based on the first intent data.

The device A 210 may perform S504 by using the DMa 218.

S505: The device A 210 sends a second request to the device B 220.

S506: The device B 220 determines second intent data corresponding to the first voice data based on the first text data.

The device B may perform S506 by using the NLUb 222.

S507: The device B 220 determines a second machine instruction corresponding to the first voice data based on the second intent data.

The device B 220 may perform S507 by using the DMb 223.

S508: The device B 220 sends the second machine instruction to the device A 210.

It is to be noted that a manner in which the device A 210 performs S501 to S505 may be similar to or the same as the manner in which the device A 210 performs S403 to S407; and a manner in which the device B performs S506 to S508 may be similar to or the same as the manner in which the device B 220 performs S408 to S410. Details are not described herein again.

In this embodiment of this application, whether the first voice data includes a user voice is no longer detected, and whether the first voice data carries the first status indication information or the second status indication information is no longer determined. In other words, S401 and S402 are omitted, and the first voice data may be any voice data. This further increases a data volume of voice data processed at a local end of the device A 210, thereby further saving bandwidth between the device A 210 and the device B 220, reducing load pressure on the device B 220, and improving efficiency of processing the first voice data.

It is to be noted that, during actual application, only one of S401 and S402 may be omitted.

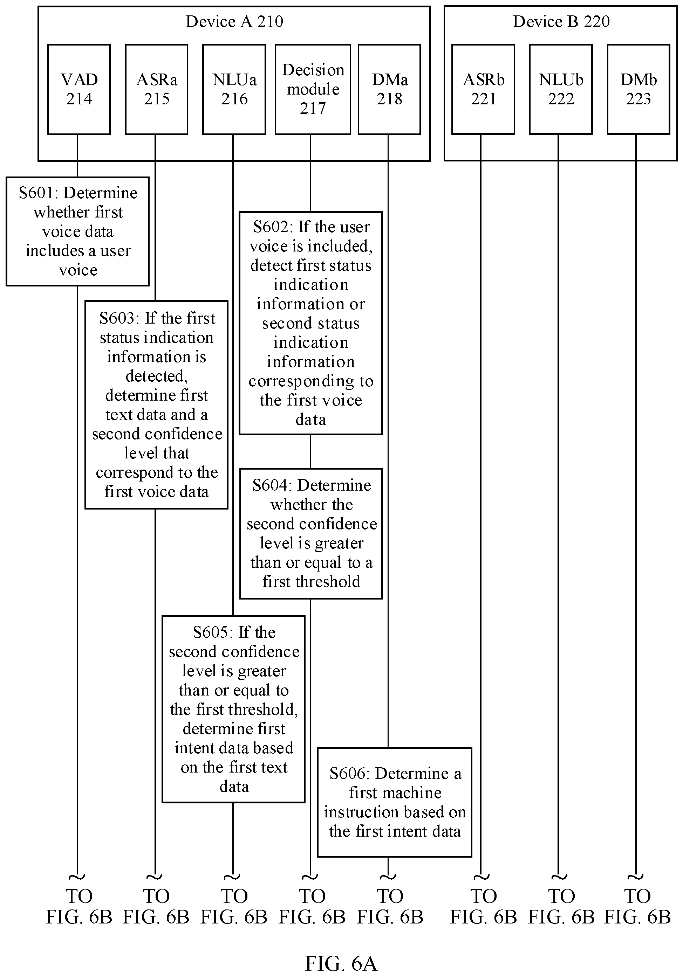

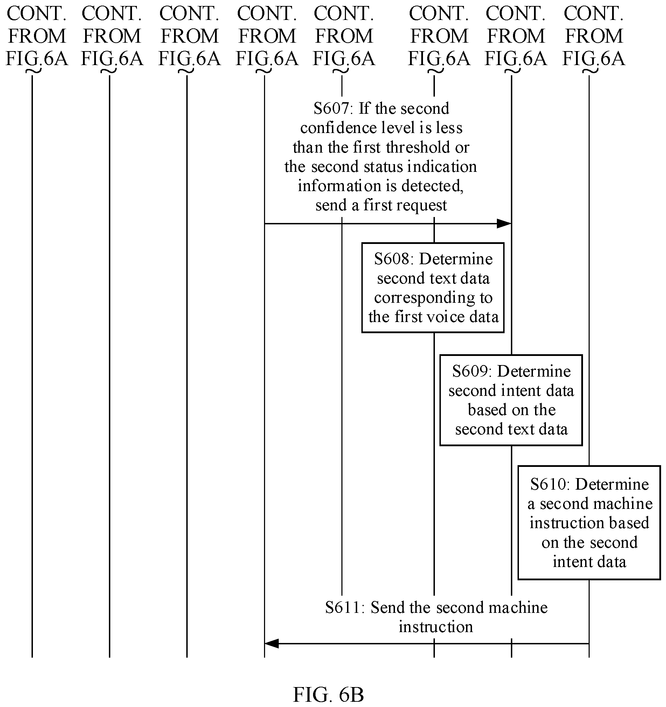

FIG. 6A and FIG. 6B are a flowchart of a voice data processing method according to an embodiment of this application. A first recognition result may include first text data. A first model may include a second model. A first entity set may include a second entity set. A second entity may include an entity in the second entity set. A first confidence level may be a second confidence level. A second recognition result may include second text data. A first entity may be an entity in a fifth entity set and/or a fourth entity set. It is to be noted that the method is not limited to a specific sequence in FIG. 6A and FIG. 6B and the following descriptions. It should be understood that, in other embodiments, ranks of some steps in the method may be interchanged based on an actual requirement, or some steps in the method may be omitted or deleted. The method includes the following steps:

S601: When first voice data is detected, the device A 210 determines whether the first voice data includes a user voice. If the first voice data includes the user voice, perform S602. If the first voice data does not include the user voice, end the process.

The device A 210 may perform S506 by using the VAD 214.

In some embodiments, if there is no unterminated second session before the first voice data, and the device A 210 detects no event corresponding to event wakeup triggering, no button operation corresponding to button wakeup triggering, and no preset wakeup word in the first voice data, first status indication information corresponding to the first voice data may be generated. The first status indication information may indicate that the first voice data is a first round of dialog in a first session and the first session is a session triggered in a wakeup-free manner.

In some embodiments, if there is an unterminated second session before the first voice data, and/or the device A 210 detects any one of a preset wakeup word included in the first voice data, an event corresponding to event wakeup triggering, and a button operation corresponding to button wakeup triggering, second status indication information corresponding to the first voice data is generated. The second status indication information may indicate that the first voice data is an $N^{th}$ round of dialog in a second session, and/or a triggering manner of the second session is voice wakeup triggering, event wakeup triggering, or button wakeup triggering, where N is an integer greater than 1.

S602: The device A 210 detects first status indication information or second status indication information corresponding to the first voice data. If the first status indication information is detected, S603 is performed. If the second status indication information is detected, S607 is performed.

The device A 210 may perform S602 by using the decision module 217.

S603: The device A 210 determines first text data and a second confidence level that correspond to the first voice data.

The device A 210 may perform S603 by using the ASRa 215. In some embodiments, the device A 210 may determine, based on a second model, the first text data and the second confidence level that correspond to the first voice data.

In some embodiments, the device A 210 includes a second entity set, and the second entity set may include at least one entity. The device A 210 may determine, based on a first entity set, the first text data and the second confidence level that correspond to the first voice data.

In some embodiments, the device A 210 may further determine first process indication information corresponding to the first text data.

S604: The device A 210 determines whether the second confidence level is greater than or equal to a first threshold. If the second confidence level is greater than or equal to the first threshold, perform S605. If the second confidence level is less than the first threshold, perform S607.

The device A 210 may perform S604 by using the decision module 217.

It is to be noted that a manner in which the device A 210 performs S604 may be similar to or the same as the manner in which the device A 210 performs S405.

S605: The device A 210 determines first intent data corresponding to the first voice data based on the first text data.

The device A 210 may perform S605 by using the NLUa 216. In some embodiments, the device A 210 may determine, based on a third model, the first intent data corresponding to the first voice data.

In some embodiments, the device A 210 includes a third entity set, and the third entity set may include at least one entity. The device A 210 may determine, based on the third entity set, the first intent data corresponding to the first voice data. In some embodiments, the device A 210 may determine second process indication information and third process indication information that correspond to the first intent data.

In some embodiments, the second entity set and the third entity set may include at least one same entity.

In some embodiments, when determining that the second process indication information is the third value, that is, the first intent data does not include the first intent, the device A 210 may not continue to perform a subsequent step, that is, discard the first voice data.

S606: The device A 210 determines a first machine instruction corresponding to the first voice data based on the first intent data.

The device A 210 may perform S606 by using the DMa 218.

S607: The device A 210 sends a first request to the device B 220.

In some embodiments, the first request carries the first voice data.

S608: The device B 220 determines second text data corresponding to the first voice data.

The device B 220 may perform S608 by using the ASRb 221. In some embodiments, the device B 220 may determine the second text data corresponding to the first voice data based on a fifth model. In some embodiments, the device B 220 may include a fifth entity set, and the fifth entity set may include at least one entity. The device B 220 may determine the second text data corresponding to the first voice data based on the fifth entity set.

In some embodiments, the fifth entity set may include more entities than the second entity set. In some embodiments, the fifth entity set may include at least some entities in the second entity set. S609: The device B 220 determines second intent data corresponding to the first voice data based on the second text data.

The device B 220 may perform S609 by using the NLUb 222. In some embodiments, the device B 220 may determine the second intent data corresponding to the first voice data based on a fourth model. The device B 220 may input the second text data to the fourth model, to obtain the second intent data output by the fourth model.

In some embodiments, the device B 220 may include a fourth entity set, and the fourth entity set may include at least one entity. The device B 220 may determine the second intent data corresponding to the first voice data based on the fourth entity set.

In some embodiments, the fourth entity set may include more entities than the third entity set. In some embodiments, the fourth entity set may include at least some entities in the third entity set. S610: The device B 220 determines a second machine instruction corresponding to the first voice data based on the second intent data.

The device B 220 may perform S610 by using the DMb 223.

S611: The device B 220 sends the second machine instruction to the device A 210.

In some embodiments, the device B 220 may send a first entity to the device A 210. The device A 210 may add the first entity to at least one of the second entity set and the third entity set. The first entity may be an entity obtained by recognizing the first text data by the device B 220 and/or an entity obtained by recognizing the first voice data by the device B 220. Alternatively, the first entity may be an entity included in the second text data and the fifth entity set, and/or the first entity may be an entity included in the second intent data and the fourth entity set.

In some embodiments, the device B 220 may send the second text data to the device A 210. The device A 210 may update the second model based on the second text data, so that the updated second model has a more accurate recognition capability. In some embodiments, the device A 210 may use the first voice data as a sample, use the second text data as a marker of the first text data, and train the second model based on the first voice data and the second text data.

It is to be noted that a manner in which the device B 220 performs S608 to S611 may be similar to or the same as the manner in which the device B 220 performs S412 to S415. Details are not described herein again.

It is to be further noted that, based on the same reason as that for omitting S401 and S402, at least one of S601 and S602 may be omitted.

In this embodiment of this application, the device A 210 may determine, based on a reliability degree of the first text data, whether to continue to process the first voice data at the local end of the device A 210 or request the device B 220 to process the first voice data, which advances a moment for determining whether the device A 210 continues processing or the device B 220 performs recognition again. Therefore, when it is difficult to accurately process the first voice data, the device B 220 is earlier requested to process the first voice data, thereby improving efficiency and accuracy of processing the first voice data.

For example, when the user of the device A 210 says "navigate to the front door of hotel A" to the device A 210, corresponding first voice data is detected by the device A 210. The VAD 214 detects the first voice data, and determines that the first voice data includes a user voice and the first voice data is the first round of dialog in a session triggered in a wakeup-free manner. The ASRa 215 recognizes the first voice data to obtain first text data of "navigate to scenic spot A" and a second confidence level of 60%.

If a first threshold is 50%, as 60% is greater than 50%, a reliability degree of the first text data is high. The decision module 217 determines that the device A 210 continues to process a subsequent step. The NLUa 216 recognizes the first text data to obtain first intent data of "intent: navigate; slot value: scenic spot A". The DMa 218 generates a first machine instruction based on the first intent data. The voice control module 213 starts a navigation application. The navigation application executes the first machine instruction to start navigation, and the navigation ends at the scenic spot A.

If a first threshold is 90%, as 60% is less than 90%, a reliability degree of the first text data is low. The decision module 217 determines that the device B 220 performs recognition again. The device A 210 sends the first voice data to the device B 220. The ASRb 221 recognizes the first voice data to obtain second text data of "navigate to the front door of hotel A". The NLUb 222 recognizes the second text data to obtain second intent data of "intent: navigate; slot value: front door of hotel A". The DMb 223 generates a second machine instruction based on the second intent data. The device B 220 sends the second machine instruction to the device A 210. The voice control module 213 starts a navigation application. The navigation application executes the second machine instruction to start navigation, and the navigation ends at the front door of hotel A.

The ASRa 215 fails to recognize "hotel A", either because the entity "hotel A" is not stored at the local end of the device A 210 or because the ASRa 215 has a low recognition capability. Therefore, the device B 220 may send the entity "hotel A" and the second text data "navigate to the front door of hotel A" to the device A 210. The device A 210 may store "hotel A". The device A 210 may further use the first voice data as a sample, use the second text data "navigate to the front door of hotel A" as a marker of the sample, and train the ASRa 215 based on the sample, to improve the recognition capability of the ASRa 215.

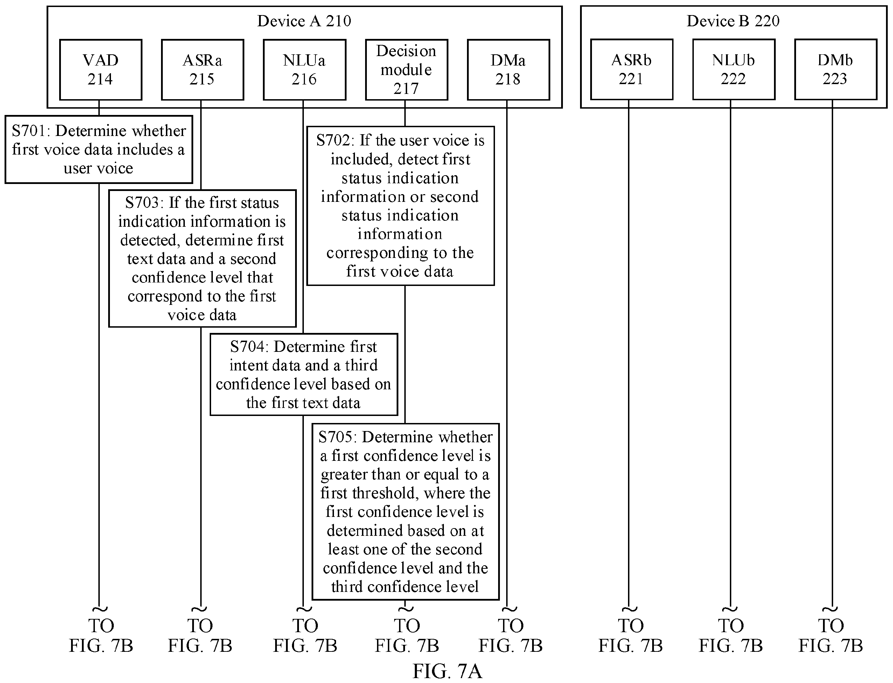

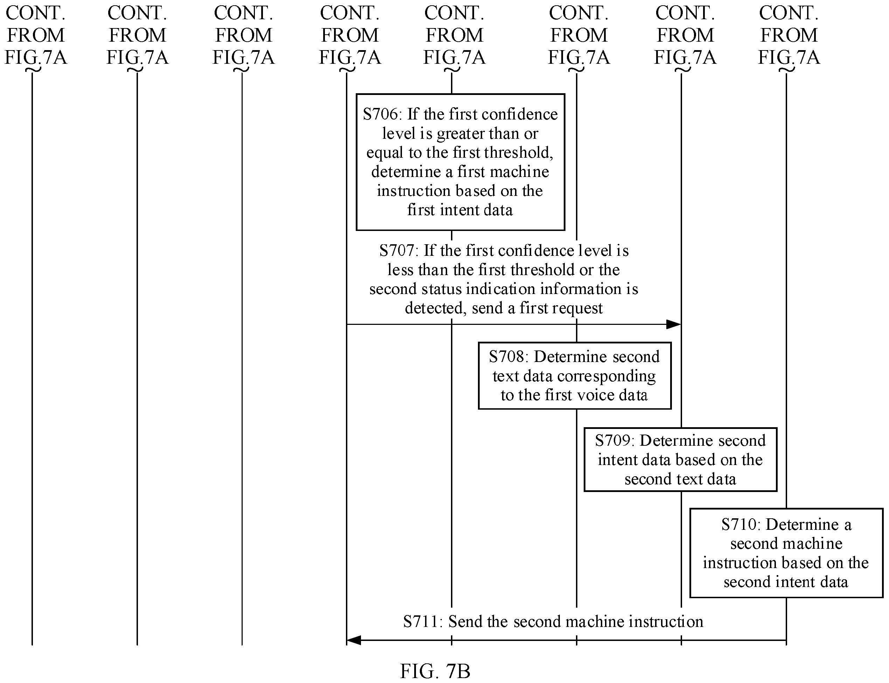

FIG. 7A and FIG. 7B are a flowchart of a voice data processing method according to an embodiment of this application. A first recognition result may include first intent data, and may further include first text data. A first model may include a third model, and may further include a second model. A first entity set may include a third set, and may further include a second entity set. A second entity may include an entity in the third entity set, and may further include an entity in the second entity set. A first confidence level may be determined based on at least one of a second confidence level and a third confidence level. A second recognition result may include second intent data, and may further include second text data. A first entity may include an entity in a fourth entity set and/or a fifth entity set. It is to be noted that the method is not limited to a specific sequence in FIG. 7A and FIG. 7B and the following descriptions. It should be understood that, in other embodiments, ranks of some steps in the method may be interchanged based on an actual requirement, or some steps in the method may be omitted or deleted. The method includes the following steps:

S701: When first voice data is detected, the device A 210 determines whether the first voice data includes a user voice. If the first voice data includes the user voice, perform S702. If the first voice data does not include the user voice, end the process.

The device A 210 may perform S701 by using the VAD 214.

In some embodiments, if there is no unterminated second session before the first voice data, and the device A 210 detects no event corresponding to event wakeup triggering, no button operation corresponding to button wakeup triggering, and no preset wakeup word in the first voice data, first status indication information corresponding to the first voice data may be generated. The first status indication information may indicate that the first voice data is a first round of dialog in a first session and the first session is a session triggered in a wakeup-free manner.

In some embodiments, if there is an unterminated second session before the first voice data, and/or the device A 210 detects any one of a preset wakeup word included in the first voice data, an event corresponding to event wakeup triggering, and a button operation corresponding to button wakeup triggering, second status indication information corresponding to the first voice data is generated. The second status indication information may indicate that the first voice data is an $N^{th}$ round of dialog in a second session, and/or a triggering manner of the second session is voice wakeup triggering, event wakeup triggering, or button wakeup triggering, where N is an integer greater than 1.

S702: The device A 210 detects first status indication information or second status indication information corresponding to the first voice data. If the first status indication information is detected, S703 is performed. If the second status indication information is detected, S707 is performed.

The device A 210 may perform S702 by using the decision module 217.

S703: The device A 210 determines first text data and a second confidence level that correspond to the first voice data.

The device A 210 may perform S703 by using the ASRa 215. In some embodiments, the device A 210 may determine, based on a second model, the first text data and the second confidence level that correspond to the first voice data.

In some embodiments, the device A 210 includes a second entity set, and the second entity set may include at least one entity. The device A 210 may determine, based on a first entity set, the first text data and the second confidence level that correspond to the first voice data.

In some embodiments, the device A 210 may further determine first process indication information corresponding to the first text data.

S704: The device A 210 determines, based on the first text data, first intent data and a third confidence level that correspond to the first voice data.

The device A 210 may perform S704 by using the NLUa 216. In some embodiments, the device A 210 may determine, based on a third model, the first intent data and the third confidence level that correspond to the first voice data.

In some embodiments, the device A 210 includes a third entity set, and the third entity set may include at least one entity. The device A 210 may determine, based on the third entity set, the first intent data and the third confidence level that correspond to the first voice data.

In some embodiments, the second entity set and the third entity set may include at least one same entity.

In some embodiments, processing is performed in S704 based on a processing result in S703, and the processing result in S703 is transferred to a processing result in S704. In this case, the second confidence level may reflect the third confidence level to some extent, and the third confidence level may also reflect the second confidence level to some extent, so that either of the second confidence level and the third confidence level may be omitted.

S705: The device A 210 determines whether a first confidence level is greater than or equal to a first threshold. If the first confidence level is greater than or equal to the first threshold, perform S706. If the first confidence level is less than the first threshold, perform S707.

The device A 210 may perform S705 by using the decision module 217.

S706: The device A 210 determines a first machine instruction corresponding to the first voice data based on the first intent data.

The device A 210 may perform S706 by using the DMa 218.

S707: The device A 210 sends a first request to the device B 220.

In some embodiments, the first request carries the first voice data.

In some embodiments, the device A 210 may send the first voice data to the device B 220 at any moment after determining that the first voice data carries the first status indication information in S702 and before sending the first request to the device B 220 in S707. Therefore, the first request may not carry the first text data. Before sending the first request through S707, the device A 210 sends the first voice data to the device B 220 in advance. In this case, if it is determined through S705 that the device B 220 needs to continue to process the first voice data, the first voice data does not need to be sent again, thereby improving efficiency of processing the first voice data.

S708: The device B 220 determines second text data corresponding to the first voice data.

The device B 220 may perform S708 by using the ASRb 221. In some embodiments, the device B 220 may determine the second text data corresponding to the first voice data based on a fifth model. The device B 220 may input the first voice data to the fifth model, to obtain the second text data output by the fifth model.

In some embodiments, the device B 220 may include a fifth entity set, and the fifth entity set may include at least one entity. The device B 220 may determine the second text data corresponding to the first voice data based on the fifth entity set.

In some embodiments, the fifth entity set may include more entities than the second entity set. In some embodiments, the fifth entity set may include at least some entities in the second entity set. S709: The device B 220 determines second intent data corresponding to the first voice data based on the second text data.

The device B may perform S709 by using the NLUb 222. In some embodiments, the device B 220 may determine the second intent data corresponding to the first voice data based on a fourth model. The device B 220 may input the second text data to the fourth model, to obtain the second intent data output by the fourth model.

In some embodiments, the device B 220 may include a fourth entity set, and the fourth entity set may include at least one entity. The device B 220 may determine the second intent data corresponding to the first voice data based on the fourth entity set.

In some embodiments, the fourth entity set may include more entities than the third entity set. In some embodiments, the fourth entity set may include at least some entities in the third entity set. S710: The device B 220 determines a second machine instruction corresponding to the first voice data based on the second intent data.

The device B 220 may perform S710 by using the DMb 223.

S711: The device B 220 sends the second machine instruction to the device A 210.

In some embodiments, the device B 220 may send a first entity to the device A 210. The device A 210 may add the first entity to at least one of the second entity set and the third entity set. The first entity may be an entity obtained by recognizing the first voice data and/or the first text data by the device B 220. In other words, the first entity may be an entity included in the second text data and the fifth entity set, and/or the first entity may be an entity included in the second intent data and the fourth entity set.

In some embodiments, the device B 220 may send the second text data to the device A 210. The device A 210 may update the second model based on the second text data, so that the updated second model has a more accurate recognition capability. In some embodiments, the device A 210 may use the first voice data as a sample, use the second text data as a marker of the first voice data, and train the second model based on the first voice data and the second text data.

In some embodiments, the device B 220 may send the second intent data to the device A 210. The device A 210 may update the third model based on the second intent data, so that the updated third model has a more accurate recognition capability. In some embodiments, the device A 210 may use the first text data as a sample, use the second intent data as a marker of the first text data, and train the third model based on the first text data and the second intent data.

It is to be noted that a manner in which the device B 220 performs S708 to S711 may be similar to or the same as the manner in which the device B 220 performs S412 to S415.

In this embodiment of this application, the device A 210 may send the first voice data to the device B 220, to request the device B 220 to recognize the first voice data when it is determined that a reliability degree of the first intent data is low. As the first voice data includes more data than the first text data, accuracy of processing the first voice data can be further improved.

It is to be noted that, based on the same reason as that for omitting S401 and S402, at least one of S701 and S702 may be omitted.

For example, when the user of the device A 210 says "navigate to the front door of hotel A" to the device A 210, corresponding first voice data is detected by the device A 210. The VAD 214 detects the first voice data, and determines that the first voice data includes a user voice and the first voice data is the first round of dialog in a session triggered in a wakeup-free manner. The ASRa 215 recognizes the first voice data to obtain first text data of "navigate to hotel A" and a second confidence level of 90%. In addition, the device A 210 also sends the first voice data to the device B 220. The NLUa 216 recognizes the first text data to obtain first intent data of "intent: navigate; slot value: hotel A" and a third confidence level of 90%. The decision module 217 multiplies the second confidence level by the third confidence level, to obtain a first confidence level of 81%.

If a first threshold is 80%, as 81% is greater than 80%, a reliability degree of the first intent data is high. The decision module 217 determines that the device A 210 continues to process a subsequent step. The DMa 218 generates a first machine instruction based on the first intent data. The voice control module 213 starts a navigation application. The navigation application executes the first machine instruction to start navigation, and the navigation ends at the hotel A.

If a first threshold is 90%, as 81% is less than 90%, a reliability degree of the first intent data is low. The decision module 217 determines that the device B 220 performs recognition again. The ASRb 221 recognizes the first voice data to obtain second text data of "navigate to the front door of hotel A". The NLUb 222 recognizes the second text data to obtain second intent data of "intent: navigate; slot value: front door of hotel A". The DMb 223 generates a second machine instruction based on the second intent data. The device B 220 sends the second machine instruction to the device A 210. The voice control module 213 starts a navigation application. The navigation application executes the second machine instruction to start navigation, and the navigation ends at the front door of hotel A.

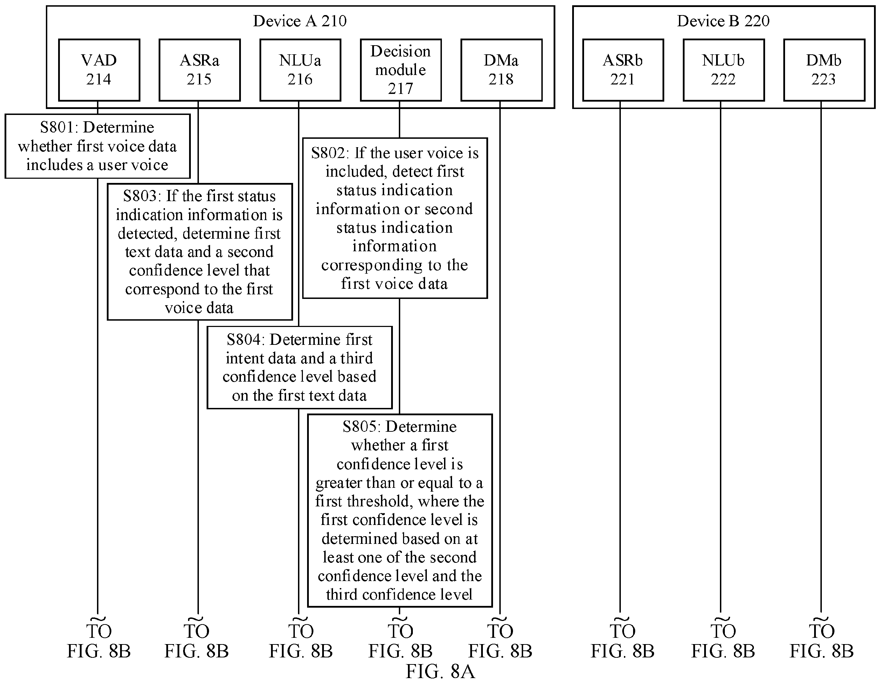

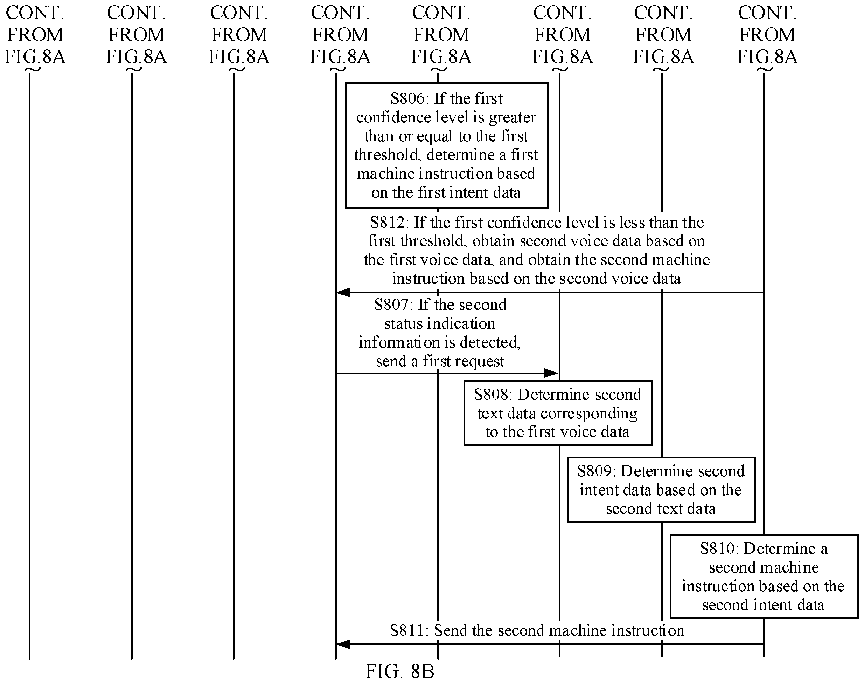

FIG. 8A and FIG. 8B are a flowchart of a voice data processing method according to an embodiment of this application. A first recognition result may include first intent data, and may further include first text data. A first model may include a third model, and may further include a second model. A first entity set may include a third set, and may further include a second entity set. A second entity may include an entity in the third entity set, and may further include an entity in the second entity set. A first confidence level may be determined based on at least one of a second confidence level and a third confidence level. A second recognition result may include second intent data, and may further include second text data. A first entity may include an entity in a fourth entity set and/or a fifth entity set. It is to be noted that the method is not limited to a specific sequence in FIG. 8A and FIG. 8B and the following descriptions. It should be understood that, in other embodiments, ranks of some steps in the method may be interchanged based on an actual requirement, or some steps in the method may be omitted or deleted. The method includes the following steps:

S801: When first voice data is detected, the device A 210 determines whether the first voice data includes a user voice. If the first voice data includes the user voice, perform S802. If the first voice data does not include the user voice, end the process.

The device A 210 may perform S801 by using the VAD 214.

In some embodiments, if there is no unterminated second session before the first voice data, and the device A 210 detects no event corresponding to event wakeup triggering, no button operation corresponding to button wakeup triggering, and no preset wakeup word in the first voice data, first status indication information corresponding to the first voice data may be generated. The first status indication information may indicate that the first voice data is a first round of dialog in a first session and the first session is a session triggered in a wakeup-free manner.

In some embodiments, if there is an unterminated second session before the first voice data, and/or the device A 210 detects any one of a preset wakeup word included in the first voice data, an event corresponding to event wakeup triggering, and a button operation corresponding to button wakeup triggering, second status indication information corresponding to the first voice data is generated. The second status indication information may indicate that the first voice data is an $N^{th}$ round of dialog in a second session, and/or a triggering manner of the second session is voice wakeup triggering, event wakeup triggering, or button wakeup triggering, where N is an integer greater than 1.

S802: The device A 210 detects first status indication information or second status indication information corresponding to the first voice data. If the first status indication information is detected, S803 is performed. If the second status indication information is detected, S807 is performed.

The device A 210 may perform S802 by using the decision module 217.

S803: The device A 210 determines first text data and a second confidence level that correspond to the first voice data.

The device A 210 may perform S803 by using the ASRa 215. In some embodiments, the device A 210 may determine, based on a second model, the first text data and the second confidence level that correspond to the first voice data.

In some embodiments, the device A 210 includes a second entity set, and the second entity set may include at least one entity. The device A 210 may determine, based on a first entity set, the first text data and the second confidence level that correspond to the first voice data.

In some embodiments, the device A 210 may further determine first process indication information corresponding to the first text data.

S804: The device A 210 determines, based on the first text data, first intent data and a third confidence level that correspond to the first voice data.

The device A 210 may perform S804 by using the NLUa 216. In some embodiments, the device A 210 may determine, based on a third model, the first intent data and the third confidence level that correspond to the first voice data.

In some embodiments, the device A 210 includes a third entity set, and the third entity set may include at least one entity. The device A 210 may determine, based on the third entity set, the first intent data and the third confidence level that correspond to the first voice data.

In some embodiments, the second entity set and the third entity set may include at least one same entity.

In some embodiments, processing is performed in S804 based on a processing result in S803, and the processing result in S803 is transferred to a processing result in S804. In this case, the second confidence level may reflect the third confidence level to some extent, and the third confidence level may also reflect the second confidence level to some extent, so that either of the second confidence level and the third confidence level may be omitted.

S805: The device A 210 determines whether a first confidence level is greater than or equal to a first threshold. If the first confidence level is greater than or equal to the first threshold, perform S806. If the first confidence level is less than the first threshold, perform S812.

The device A 210 may perform S805 by using the decision module 217.

S806: The device A 210 determines a first machine instruction corresponding to the first voice data based on the first intent data.

The device A 210 may perform S806 by using the DMa 218.

S807: The device A 210 sends a first request to the device B 220.

The first request carries the first voice data.

S808: The device B 220 determines second text data corresponding to the first voice data.

The device B 220 may perform S808 by using the ASRb 221. In some embodiments, the device B 220 may determine the second text data corresponding to the first voice data based on a fifth model. In some embodiments, the device B 220 may include a fifth entity set, and the fifth entity set may include at least one entity. The device B 220 may determine the second text data corresponding to the first voice data based on the fifth entity set.

In some embodiments, the fifth entity set may include more entities than the second entity set. In some embodiments, the fifth entity set may include at least some entities in the second entity set. S809: The device B 220 determines second intent data corresponding to the first voice data based on the second text data.

The device B may perform S809 by using the NLUb 222. In some embodiments, the device B 220 may determine the second intent data corresponding to the first voice data based on a fourth model. In some embodiments, the device B 220 may include a fourth entity set, and the fourth entity set may include at least one entity. The device B 220 may determine the second intent data corresponding to the first voice data based on the fourth entity set.

In some embodiments, the fourth entity set may include more entities than the third entity set. In some embodiments, the fourth entity set may include at least some entities in the third entity set. S810: The device B 220 determines a second machine instruction corresponding to the first voice data based on the second intent data.

The device B 220 may perform S810 by using the DMb 223.

S811: The device B 220 sends the second machine instruction to the device A 210.

In some embodiments, the device B 220 may send a first entity to the device A 210. The device A 210 may add the first entity to at least one of the second entity set and the third entity set. The first entity may be an entity obtained by recognizing the first voice data and/or the first text data by the device B 220. In other words, the first entity may be an entity included in the second text data and the fifth entity set, and/or the first entity may be an entity included in the second intent data and the fourth entity set.

In some embodiments, the device B 220 may send the second text data to the device A 210. The device A 210 may update the second model based on the second text data, so that the updated second model has a more accurate recognition capability. In some embodiments, the device A 210 may use the first voice data as a sample, use the second text data as a marker of the first voice data, and train the second model based on the first voice data and the second text data.

In some embodiments, the device B 220 may send the second intent data to the device A 210. The device A 210 may update the third model based on the second intent data, so that the updated third model has a more accurate recognition capability. In some embodiments, the device A 210 may use the first text data as a sample, use the second intent data as a marker of the first text data, and train the third model based on the first text data and the second intent data.

It is to be noted that a manner in which the device B 220 performs S808 to S811 may be similar to or the same as the manner in which the device B 220 performs S412 to S415.

S812: The device A 210 obtains second voice data based on the first voice data, and obtains the second machine instruction from the device B 220 based on the second voice data.

The device A 210 may request, based on the first voice data, the user to start an $N^{th}$ round of dialog. The device A 210 obtains the second voice data in a manner similar to or the same as that of obtaining the first voice data. The second voice data may be an $N^{th}$ round of dialog in the first session. Therefore, the second voice data corresponds to the second status indication information. In some embodiments, the second status indication information may include a first session identifier of the first session, a second round identifier, and a first triggering type. The second round identifier may indicate that the second voice data is the $N^{th}$ round of dialog.

In some embodiments, the device A 210 may generate a third machine instruction based on the first voice data. The third machine instruction generates dialog prompt information, and the dialog prompt information may prompt the user to start the $N^{th}$ round of dialog. The device A 210 sends the dialog prompt information based on the third machine instruction. After sensing the dialog prompt information, the user starts the $N^{th}$ round of dialog. The device A 210 obtains the second voice data through collection by using a microphone.

As the second voice data corresponds to the second status indication information, after detecting the second voice data and performing, based on the second voice data, steps similar to or the same as S801 and S802, the device A 210 may perform a step similar to or the same as S807 to send the second voice data to the device B 220. The device B 220 may perform steps similar to or the same as S808 to S810 to process the second voice data, and send the second machine instruction to the device A 210.

In this embodiment of this application, after processing the first voice data to obtain the first text data and the first intent data, the device A 210 may determine, based on a reliability degree of the first intent data, whether to continue to process the first voice data at the local end of the device A 210 or request the device B 220 to process the first voice data. When the reliability degree of the first intent data is high, the first voice data can continue to be processed at the local end of the device A 210. When the reliability degree of the first intent data is low, the second voice data can be obtained based on the first voice data, so that an operation required by the user is reconfirmed from the user, and then the device B 220 is requested to recognize the second voice data again, thereby improving accuracy of the second machine instruction.

It is to be noted that, based on the same reason as that for omitting S401, S801 may be omitted.

For example, when the user of the device A 210 says "navigate to the front door of hotel A" to the device A 210, corresponding first voice data is detected by the device A 210. The VAD 214 detects the first voice data, and determines that the first voice data includes a user voice and the first voice data is the first round of dialog in a session triggered in a wakeup-free manner. The ASRa 215 recognizes the first voice data to obtain first text data of "navigate to hotel A" and a second confidence level of 90%. The NLUa 216 recognizes the first text data to obtain first intent data of "intent: navigate; slot value: hotel A" and a third confidence level of 90%. The decision module 217 multiplies the second confidence level by the third confidence level, to obtain a first confidence level of 81%.

If a first threshold is 80%, as 81% is greater than 80%, a reliability degree of the first intent data is high. The decision module 217 determines that the device A 210 continues to process a subsequent step. The DMa 218 generates a first machine instruction based on the first intent data. The voice control module 213 starts a navigation application. The navigation application executes the first machine instruction to start navigation, and the navigation ends at the hotel A.

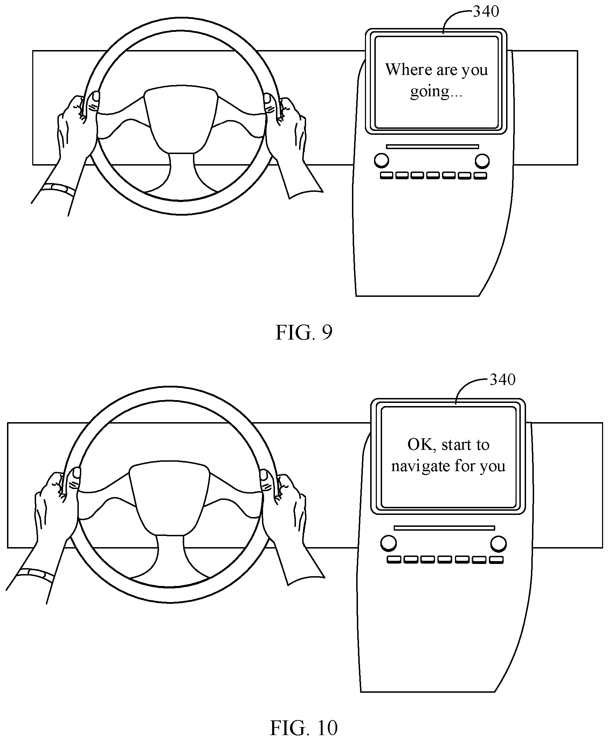

If a first threshold is 90%, as 81% is less than 90%, a reliability degree of the first intent data is low. The decision module 217 determines that the device B 220 performs recognition again. The device A 210 displays a first interface on a display, as shown in FIG. 9. The first interface includes prompt information "where are you going..." displayed by the device A 210 based on first voice data. In addition, the device A 210 may play a voice corresponding to the prompt information, that is, third voice data. When the user sees the prompt information and/or hears the third voice data, the user says "the front door of hotel A" to the device A 210, and corresponding second voice data is detected by the device A 210. The VAD 214 detects the second voice data, and determines that the second voice data includes a user voice and the second voice data is the second round of dialog in a session triggered in a wakeup-free manner. The device A 210 sends the second voice data to the device B 220. The ASRb 221 recognizes the second voice data and the first voice data to obtain second text data of "navigate to the front door of hotel A". The NLUb 222 recognizes the second text data to obtain second intent data of "intent: navigate; slot value: front door of hotel A". The DMb 223 generates a second machine instruction based on the second intent data. The device B 220 sends the second machine instruction to the device A 210. The voice control module 213 starts a navigation application. The navigation application executes the second machine instruction to start navigation, and the navigation ends at the front door of hotel A. The device B may further display a second interface, as shown in FIG. 10. The second interface includes prompt information "OK, start to navigate for you". In addition, the device A 210 may play a voice corresponding to the prompt information, that is, fourth voice data, to notify the user of a corresponding processing result.

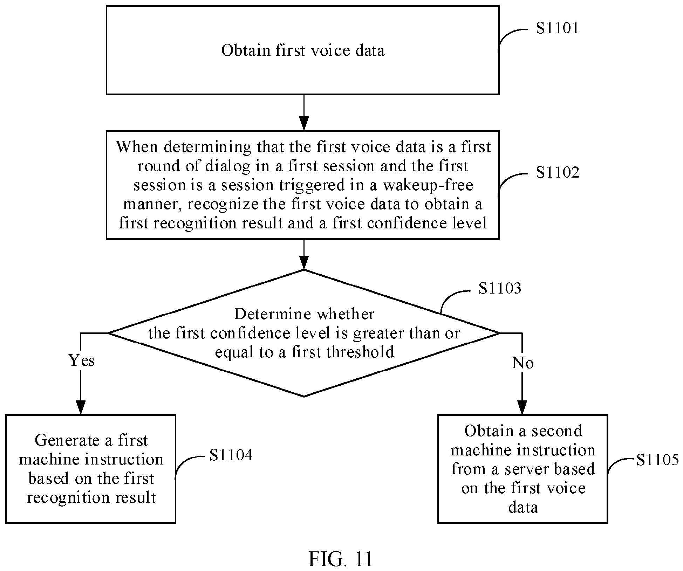

FIG. 11 is a flowchart of a voice data processing method according to an embodiment of this application. It is to be noted that the method is not limited to a specific sequence in FIG. 11 and the following descriptions. It should be understood that, in other embodiments, ranks of some steps in the method may be interchanged based on an actual requirement, or some steps in the method may be omitted or deleted. The method includes the following steps:

S1101: Obtain first voice data.

S1102: When determining that the first voice data is a first round of dialog in a first session and the first session is a session triggered in a wakeup-free manner, recognize the first voice data to obtain a first recognition result and a first confidence level, where the first confidence level indicates a reliability degree of the first recognition result.

S1103: The device A 210 determines whether a first confidence level is greater than or equal to a first threshold. If the first confidence level is greater than or equal to the first threshold, perform S1104. If the first confidence level is less than the first threshold, perform S1105.

S1104: The device A 210 generates a first machine instruction based on the first recognition result.

S1105: The device A 210 obtains a second machine instruction from a server based on the first voice data.

It is to be noted that, for a manner in which the device A 210 performs S1101 to S1104, refer to related descriptions in the foregoing embodiments. Details are not described herein again.

In this embodiment of this application, when obtaining the first voice data and determining that the first voice data is the first round of dialog in the first session triggered in the wakeup-free manner, the device A 210 may recognize the first voice data to obtain the first recognition result and the first confidence level. The first confidence level may indicate a confidence level of the first recognition result. Therefore, for the first round of session in the session triggered in the wakeup-free manner, the device A 210 may generate the first machine instruction at a local end based on the first recognition result when the first confidence level is greater than or equal to the first threshold, that is, when the first recognition result has a high reliability degree, thereby saving bandwidth between the device and the server, reducing load pressure on the server, and improving efficiency of processing the first voice data.

In some embodiments, S1102 may be replaced with the following: When determining that the first voice data is a first round of dialog in a first session or when determining that the first voice data is an $N^{th}$ round of dialog in the first session and the first session is a session triggered in a wakeup-free manner, recognize the first voice data to obtain a first recognition result and a first confidence level, where the first confidence level indicates a reliability degree of the first recognition result. In some embodiments, S1102 may be replaced with the following: Recognize the first voice data to obtain a first recognition result and a first confidence level, where the first confidence level indicates a reliability degree of the first recognition result.

Based on a same inventive concept, an embodiment of this application further provides an electronic device. The electronic device provided in this embodiment includes a memory and a processor. The memory is configured to store a computer program. The processor is configured to invoke the computer program to perform the method in the foregoing method embodiments.

The electronic device provided in this embodiment may perform the foregoing method embodiments. The implementation principles and technical effects thereof are similar. Details are not described herein.

Based on a same inventive concept, an embodiment of this application further provides a chip system. The chip system includes a processor. The processor is coupled to a memory. The processor executes a computer program stored in the memory, to implement the method in the foregoing method embodiments.

The chip system may be a single chip or a chip module including a plurality of chips.

An embodiment of this application further provides a computer-readable storage medium, storing a computer program. When the computer program is executed by a processor, the method in the foregoing method embodiments is implemented.

An embodiment of this application further provides a computer program product. When the computer program product is run on an electronic device, the electronic device performs the method in the foregoing method embodiments.

If the integrated unit is implemented in a form of a software functional unit and is sold or used as an independent product, the integrated unit may be stored in a computer-readable storage medium.

Based on such an understanding, in this application, all or some of procedures of the method in the foregoing embodiments may be implemented by a computer program instructing relevant hardware. The computer program may be stored in a computer-readable storage medium. When the computer program is executed by a processor, steps of the foregoing method embodiments may be implemented. The computer program includes computer program code. The computer program code may be in a source code form, an object code form, an executable file form, an intermediate form, or the like. The computer-readable storage medium may include at least any entity or apparatus that can include the computer program code in a photographing apparatus/terminal device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disc.

In the foregoing embodiments, the description of each embodiment has respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In embodiments provided in this application, it should be understood that the disclosed apparatus/device and method may be implemented in other manners. For example, the described apparatus/device embodiments are merely examples. For example, division into the modules or units is merely logical function division and may be other division during actual implementation. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in electrical, mechanical, or another form.

It should be understood that the term "include" when used in the specification of this application and the appended claims indicates the presence of the described features, wholes, steps, operations, elements, and/or components, but does not exclude the presence or addition of one or more other features, wholes, steps, operations, elements, components, and/or collections thereof.

It should also be understood that the term "and/or" used in the specification of this application and the appended claims refers to any combination of one or more of associated items and all possible combinations, and includes these combinations.

As used in the specification of this application and the appended claims, the term "if" may be interpreted as "when" or "once" or "in response to determining" or "in response to detecting" depending on the context. Similarly, the phrase "if it is determined" or "if [described condition or event] is detected" may be interpreted, depending on the context, as "once it is determined" or "in response to determining" or "once [described condition or event] is detected" or "in response to that [described condition or event] is detected".

In addition, in the descriptions of the specification of this application and the appended claims, the terms "first", "second", "third", and the like are merely for differentiated description, but cannot be understood as an indication or an implication of relative importance.

Reference to "an embodiment" or "some embodiments" described in the specification of this application means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise especially emphasized in another manner. The terms "include", "have", and variations thereof all mean "including but not limited to", unless otherwise especially emphasized in another manner.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can still be made to some or all technical features thereof, without departing from the scope of the technical solutions of embodiments of this application.

**Claims**

1. A voice data processing method, applied to a terminal device, wherein the method comprises:

   obtaining first voice data;
   when determining that the first voice data is a first round of dialog in a first session and the first session is a session triggered in a wakeup-free manner, recognizing the first voice data to obtain a first recognition result and a first confidence level, wherein the first confidence level indicates a reliability degree of the first recognition result; and generating a first machine instruction based on the first recognition result if the first confidence level is greater than or equal to a first threshold.

2. The method according to claim 1, wherein the determining that the first voice data is a first round of dialog in a first session and the first session is a session triggered in a wakeup-free manner comprises:
   determining, if first status indication information corresponding to the first voice data is detected, that the first voice data is the first round of dialog in the first session and the first session is the session triggered in the wakeup-free manner.

3. The method according to claim 1 or 2, wherein the method further comprises:
   obtaining a second machine instruction from a server based on the first voice data if the first confidence level is less than the first threshold.

4. The method according to claim 3, wherein the method further comprises:

   sending the first voice data to the server; and
   the obtaining a second machine instruction from a server based on the first voice data comprises:
   receiving the second machine instruction sent by the server based on the first voice data.

5. The method according to claim 4, wherein the sending the first voice data to the server comprises:

   sending the first voice data to the server when the first voice data is detected; and
   before the receiving the second machine instruction sent by the server based on the first voice data, the method further comprises:
   sending a first request to the server, wherein the first request is for requesting the server to recognize the first voice data.

6. The method according to claim 4, wherein the sending the first voice data to the server comprises:
   sending a first request and the first voice data to the server if the first confidence level is less than the first threshold, wherein the first request is for requesting the server to recognize the first voice data.

7. The method according to claim 3, wherein the method further comprises:

   sending first text data corresponding to the first voice data to the server; and
   the obtaining a second machine instruction from a server based on the first voice data comprises:
   receiving the second machine instruction sent by the server based on the first text data.

8. The method according to claim 7, wherein the sending first text data corresponding to the first voice data to the server comprises:
   sending a second request and the first text data to the server if the first confidence level is less than the first threshold, wherein the second request is for requesting the server to recognize the first text data.

9. The method according to claim 3, wherein the obtaining a second machine instruction from a server based on the first voice data comprises:

   obtaining second voice data based on the first voice data, wherein the second voice data is an $N^{th}$ round of dialog in the first session, and N is an integer greater than 1; and
   receiving the second machine instruction sent by the server based on the second voice data.

10. The method according to any one of claims 1 to 9, wherein the recognizing the first voice data to obtain a first recognition result and a first confidence level comprises:
recognizing the first voice data based on a stored first entity set and a stored first model, to obtain the first recognition result and the first confidence level.

11. The method according to claim 10, wherein the method further comprises:

obtaining a first entity from the server based on the first voice data if the first confidence level is less than the first threshold, wherein the first entity is obtained by recognizing the first voice data by the server; and
adding the first entity to the first entity set.

12. The method according to claim 10 or 11, wherein the method further comprises:

obtaining a second recognition result from the server based on the first voice data if the first confidence level is less than the first threshold, wherein the second recognition result is obtained by recognizing the first voice data by the server; and
updating the first model based on the second recognition result.

13. The method according to claim 12, wherein the first recognition result comprises the first text data corresponding to the first voice data, the second recognition result comprises second text data corresponding to the first voice data, and the obtaining a second recognition result from the server based on the first voice data comprises:

sending the first voice data to the server; and
obtaining the second text data sent by the server based on the first voice data.

14. The method according to claim 12, wherein the first recognition result comprises first intent data corresponding to the first voice data, the second recognition result comprises at least one of second intent data and second text data, both the second intent data and the second text data correspond to the first voice data, and the obtaining a second recognition result from the server based on the first voice data comprises:

sending the first voice data to the server, and obtaining at least one of the second intent data and the second text data that are sent by the server based on the first voice data; or
sending the first text data corresponding to the first voice data to the server, and obtaining the second intent data sent by the server based on the first text data.

15. The method according to any one of claims 1 to 14, wherein the first recognition result comprises the first intent data corresponding to the first voice data, and before the generating a first machine instruction based on the first recognition result if the first confidence level is greater than or equal to a first threshold, the method further comprises: determining that the first intent data comprises a first intent.

16. A terminal device, comprising a memory and a processor, wherein the memory is configured to store a computer program, and the processor is configured to invoke the computer program to perform the method according to any one of claims 1 to 15.

17. A computer-readable storage medium, storing a computer program, wherein when the computer program is executed by a processor, the method according to any one of claims 1 to 15 is implemented.

18. A computer program product, wherein when the computer program product is run on a terminal device, the terminal device is enabled to perform the method according to any one of claims 1 to 15.

Electronic device 100

| | | |
|---|---|---|
| Memory 120 | | Communication module 130 |
| | Processor 110 | |
| Microphone 140 | | Speaker 150 |

Display 160

FIG. 1

FIG. 2

320

310

350

330

340

Where are you going...

FIG. 3

EP 4 517 745 A1

Device A 210

| VAD 214 | ASRa 215 | NLUa 216 | Decision module 217 | DMa 218 |

Device B 220

| ASRb 221 | NLUb 222 | DMb 223 |

S401: Determine whether first voice data includes a user voice

S402: If the user voice is included, detect first status indication information or second status indication information corresponding to the first voice data

S403: If the first status indication information is detected, determine first text data and a second confidence level that correspond to the first voice data

S404: Determine first intent data and a third confidence level based on the first text data

S405: Determine whether a first confidence level is greater than or equal to a first threshold, where the first confidence level is determined based on at least one of the second confidence level and the third confidence level

TO FIG. 4B    TO FIG. 4B    TO FIG. 4B    TO FIG. 4B    TO FIG. 4B    TO FIG. 4B    TO FIG. 4B    TO FIG. 4B

FIG. 4A

CONT. FROM FIG. 4A  CONT. FROM FIG. 4A  CONT. FROM FIG. 4A  CONT. FROM FIG. 4A  CONT. FROM FIG. 4A  CONT. FROM FIG. 4A  CONT. FROM FIG. 4A  CONT. FROM FIG. 4A

S406: If the first confidence level is greater than or equal to the first threshold, determine a first machine instruction based on the first intent data

S407: If the first confidence level is less than the first threshold, send a second request

S408: Determine second intent data based on the first text data

S409: Determine a second machine instruction based on the second intent data

S410: Send the second machine instruction

S411: If the second status indication information is detected, send a first request

S412: Determine second text data corresponding to the first voice data

S413: Determine the second intent data based on the second text data

S414: Determine the second machine instruction based on the second intent data

S415: Send the second machine instruction

FIG. 4B

EP 4 517 745 A1

| Device A 210 | | | | Device B 220 | | |
|---|---|---|---|---|---|---|
| ASRa 215 | NLUa 216 | Decision module 217 | DMa 218 | ASRb 221 | NLUb 222 | DMb 223 |

S501: Determine first text data and a second confidence level that correspond to first voice data

S502: Determine first intent data and a third confidence level based on the first text data

S503: Determine whether a first confidence level is greater than or equal to a first threshold, where the first confidence level is determined based on at least one of the second confidence level and the third confidence level

~
TO FIG. 5B

~
TO FIG. 5B

~
TO FIG. 5B

~
TO FIG. 5B

~
TO FIG. 5B

~
TO FIG. 5B

~
TO FIG. 5B

FIG. 5A

CONT. CONT. CONT. CONT. CONT. CONT. CONT.
FROM FROM FROM FROM FROM FROM FROM
FIG.5A FIG.5A FIG.5A FIG.5A FIG.5A FIG.5A FIG.5A

S504: If the first
confidence level is
greater than or equal
to the first threshold,
determine a first
machine instruction
based on the first
intent data

S505: If the first confidence
level is less than the first
threshold, send a second request

S506: Determine
second intent data
based on the first
text data

S507: Determine a
second machine
instruction based on
the second intent
data

S508: Send the second machine instruction

FIG. 5B

| Device A 210 | | | | | Device B 220 | | |
|---|---|---|---|---|---|---|---|
| VAD 214 | ASRa 215 | NLUa 216 | Decision module 217 | DMa 218 | ASRb 221 | NLUb 222 | DMb 223 |

S601: Determine whether first voice data includes a user voice

S602: If the user voice is included, detect first status indication information or second status indication information corresponding to the first voice data

S603: If the first status indication information is detected, determine first text data and a second confidence level that correspond to the first voice data

S604: Determine whether the second confidence level is greater than or equal to a first threshold

S605: If the second confidence level is greater than or equal to the first threshold, determine first intent data based on the first text data

S606: Determine a first machine instruction based on the first intent data

TO FIG. 6B   TO FIG. 6B   TO FIG. 6B   TO FIG. 6B   TO FIG. 6B   TO FIG. 6B   TO FIG. 6B   TO FIG. 6B

FIG. 6A

CONT. CONT. CONT. CONT. CONT. CONT. CONT. CONT.
FROM FROM FROM FROM FROM FROM FROM FROM
FIG.6A FIG.6A FIG.6A FIG.6A FIG.6A FIG.6A FIG.6A FIG.6A

S607: If the second
confidence level is less
than the first threshold or
the second status indication
information is detected,
send a first request

S608: Determine
second text data
corresponding to
the first voice data

S609: Determine
second intent data
based on the
second text data

S610: Determine
a second machine
instruction based
on the second
intent data

S611: Send the second machine
instruction

FIG. 6B

| Device A 210 | | | | | Device B 220 | | |
|---|---|---|---|---|---|---|---|
| VAD 214 | ASRa 215 | NLUa 216 | Decision module 217 | DMa 218 | ASRb 221 | NLUb 222 | DMb 223 |

S701: Determine whether first voice data includes a user voice

S702: If the user voice is included, detect first status indication information or second status indication information corresponding to the first voice data

S703: If the first status indication information is detected, determine first text data and a second confidence level that correspond to the first voice data

S704: Determine first intent data and a third confidence level based on the first text data

S705: Determine whether a first confidence level is greater than or equal to a first threshold, where the first confidence level is determined based on at least one of the second confidence level and the third confidence level

TO FIG. 7B    TO FIG. 7B    TO FIG. 7B    TO FIG. 7B    TO FIG. 7B    TO FIG. 7B    TO FIG. 7B    TO FIG. 7B

FIG. 7A

S706: If the first confidence level is greater than or equal to the first threshold, determine a first machine instruction based on the first intent data

S707: If the first confidence level is less than the first threshold or the second status indication information is detected, send a first request

S708: Determine second text data corresponding to the first voice data

S709: Determine second intent data based on the second text data

S710: Determine a second machine instruction based on the second intent data

S711: Send the second machine instruction

FIG. 7B

EP 4 517 745 A1

EP 4 517 745 A1

Device A 210

| VAD 214 | ASRa 215 | NLUa 216 | Decision module 217 | DMa 218 |

Device B 220

| ASRb 221 | NLUb 222 | DMb 223 |

S801: Determine whether first voice data includes a user voice

S802: If the user voice is included, detect first status indication information or second status indication information corresponding to the first voice data

S803: If the first status indication information is detected, determine first text data and a second confidence level that correspond to the first voice data

S804: Determine first intent data and a third confidence level based on the first text data

S805: Determine whether a first confidence level is greater than or equal to a first threshold, where the first confidence level is determined based on at least one of the second confidence level and the third confidence level

TO FIG. 8B   TO FIG. 8B   TO FIG. 8B   TO FIG. 8B   TO FIG. 8B   TO FIG. 8B   TO FIG. 8B   TO FIG. 8B

FIG. 8A

CONT. FROM FIG.8A   CONT. FROM FIG.8A   CONT. FROM FIG.8A   CONT. FROM FIG.8A   CONT. FROM FIG.8A   CONT. FROM FIG.8A   CONT. FROM FIG.8A   CONT. FROM FIG.8A

S806: If the first confidence level is greater than or equal to the first threshold, determine a first machine instruction based on the first intent data

S812: If the first confidence level is less than the first threshold, obtain second voice data based on the first voice data, and obtain the second machine instruction based on the second voice data

S807: If the second status indication information is detected, send a first request

S808: Determine second text data corresponding to the first voice data

S809: Determine second intent data based on the second text data

S810: Determine a second machine instruction based on the second intent data

S811: Send the second machine instruction

FIG. 8B

EP 4 517 745 A1

FIG. 9

FIG. 10

Obtain first voice data — S1101

When determining that the first voice data is a first round of dialog in a first session and the first session is a session triggered in a wakeup-free manner, recognize the first voice data to obtain a first recognition result and a first confidence level — S1102

Determine whether the first confidence level is greater than or equal to a first threshold — S1103

Yes

No

Generate a first machine instruction based on the first recognition result — S1104

Obtain a second machine instruction from a server based on the first voice data — S1105

FIG. 11

## INTERNATIONAL SEARCH REPORT

International application No.

**PCT/CN2023/099358**

### A. CLASSIFICATION OF SUBJECT MATTER

G10L15/30(2013.01)i; G10L15/22(2006.01)i; G10L15/00(2013.01)i

According to International Patent Classification (IPC) or to both national classification and IPC

### B. FIELDS SEARCHED

Minimum documentation searched (classification system followed by classification symbols)

G10L15/-

Documentation searched other than minimum documentation to the extent that such documents are included in the fields searched

Electronic data base consulted during the international search (name of data base and, where practicable, search terms used)

CNTXT, ENTXT, ENTXTC: 华为, 宋凯凯, 周剑辉, 吴奇强, 宋超领, 对话, 服务器, 更新, 会话, 集, 集合, 库, 门限, 免唤醒, 实体集, 识别, 首次, 首轮, 意图, 音频, 语义, 语音, 云, 指示, 置信, 置信度, 状态, 子集, 阈值, cloud, database, model, server, threshold, updat+, data set, confidenc+

### C. DOCUMENTS CONSIDERED TO BE RELEVANT

| Category* | Citation of document, with indication, where appropriate, of the relevant passages | Relevant to claim No. |
|---|---|---|
| A | CN 114299941 A (BEIJING BAIDU NETCOM SCIENCE AND TECHNOLOGY CO., LTD.) 08 April 2022 (2022-04-08) entire document | 1-18 |
| A | CN 109410952 A (BEIJING MORAN COGNITIVE TECHNOLOGY CO., LTD.) 01 March 2019 (2019-03-01) entire document | 1-18 |
| A | US 2021166678 A1 (SAMSUNG ELECTRONICS CO., LTD.) 03 June 2021 (2021-06-03) entire document | 1-18 |
| A | US 2015287413 A1 (SAMSUNG ELECTRONICS CO., LTD.) 08 October 2015 (2015-10-08) entire document | 1-18 |
| A | CN 111681647 A (BEIJING BAIDU NETCOM SCIENCE AND TECHNOLOGY CO., LTD.) 18 September 2020 (2020-09-18) entire document | 1-18 |
| A | CN 111177358 A (HUAWEI TECHNOLOGIES CO., LTD.) 19 May 2020 (2020-05-19) entire document | 1-18 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 August 2023** | **06 September 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/099358**

**C.     DOCUMENTS CONSIDERED TO BE RELEVANT**

| Category* | Citation of document, with indication, where appropriate, of the relevant passages | Relevant to claim No. |
|---|---|---|
| A | CN 113571053 A (HUAWEI TECHNOLOGIES CO., LTD.) 29 October 2021 (2021-10-29) entire document | 1-18 |
| A | CN 114223029 A (SAMSUNG ELECTRONICS CO., LTD.) 22 March 2022 (2022-03-22) entire document | 1-18 |

Form PCT/ISA/210 (second sheet) (July 2022)

**INTERNATIONAL SEARCH REPORT**
Information on patent family members

International application No.

**PCT/CN2023/099358**

| Patent document cited in search report | | | Publication date (day/month/year) | Patent family member(s) | | | Publication date (day/month/year) |
|---|---|---|---|---|---|---|---|
| CN | 114299941 | A | 08 April 2022 | None | | | |
| CN | 109410952 | A | 01 March 2019 | CN | 109410952 | B | 28 February 2020 |
| US | 2021166678 | A1 | 03 June 2021 | US | 11705110 | B2 | 18 July 2023 |
| | | | | WO | 2021107390 | A1 | 03 June 2021 |
| | | | | KR | 20210066651 | A | 07 June 2021 |
| US | 2015287413 | A1 | 08 October 2015 | US | 2017236519 | A1 | 17 August 2017 |
| | | | | US | 10074372 | B2 | 11 September 2018 |
| | | | | US | 2019080696 | A1 | 14 March 2019 |
| | | | | US | 10643621 | B2 | 05 May 2020 |
| | | | | EP | 2930716 | A1 | 14 October 2015 |
| | | | | EP | 2930716 | B1 | 31 October 2018 |
| | | | | US | 9640183 | B2 | 02 May 2017 |
| CN | 111681647 | A | 18 September 2020 | None | | | |
| CN | 111177358 | A | 19 May 2020 | WO | 2021135603 | A1 | 08 July 2021 |
| CN | 113571053 | A | 29 October 2021 | None | | | |
| CN | 114223029 | A | 22 March 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210667633